(19) Europäisches Patentamt
European Patent Office
Office européen des brevets

(11) **EP 3 129 564 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(21) Anmeldenummer: **15718148.8**

(22) Anmeldetag: **02.04.2015**

(51) Int Cl.:
***E04C 2/12*** *(2006.01)*

(86) Internationale Anmeldenummer:
**PCT/EP2015/057277**

(87) Internationale Veröffentlichungsnummer:
**WO 2015/155105 (15.10.2015 Gazette 2015/41)**

(54) **LEICHTBAUELEMENT, HERSTELLUNGSVERFAHREN DAFÜR, VERWENDUNG DESSELBEN, SOWIE LEICHTBAUPLATTE UND DÄMMSTOFF**

LIGHTWEIGHT CONSTRUCTION ELEMENT, MANUFACTURING METHOD THEREFOR, USE OF SAME, AND LIGHTWEIGHT PANEL AND INSULATING MATERIAL

ÉLÉMENT DE CONSTRUCTION LÉGER, PROCÉDÉ DE PRODUCTION DUDIT ÉLÉMENT, UTILISATION DUDIT ÉLÉMENT, ET PLAQUE LÉGÈRE ET MATÉRIAU ISOLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2014 CH 566142014**

(43) Veröffentlichungstag der Anmeldung:
**15.02.2017 Patentblatt 2017/07**

(73) Patentinhaber: **Bionic Alpha AG**
**9500 Wil (CH)**

(72) Erfinder: **BERGER, Johann**
**CH-9500 Wil (CH)**

(74) Vertreter: **Kaminski Harmann**
**Patentanwälte AG (Schweiz)**
**Rosenbergstrasse 60**
**9000 St.Gallen (CH)**

(56) Entgegenhaltungen:
**EP-A1- 1 734 200        EP-A1- 2 060 694**
**AT-A1- 509 157          DE-A1- 19 757 344**
**DE-A1- 19 853 497**

EP 3 129 564 B1

**Beschreibung**

Die Erfindung bezieht sich auf Leichtbauplatten nach dem Oberbegriff des Anspruches 1, auf solche Lichtbauplatten, die mit einer Lage aus Dämmstoff ein Leichtbauelement bilden, auf ein Verfahren zum Herstellen eines Leichtbauelementes nach dem Oberbegriff des Anspruchs 9 und auf die Verwendung dieser Leichtbauelemente und/oder - platten zum Erstellen eines Hauskörpers nach dem Oberbegriff des Anspruchs 13. Die vorliegende Erfindung liegt auf dem Gebiet von Baumaterial auf der Basis von Holz, welches mindestens eine Lage in der Form einer Leichtbauplatte aus Holz umfasst.

EP 1 734 200 A1 und EP 2 060 694 A1 beschreiben Elemente aus Holz, bei denen sich in Längsrichtung erstreckende Hölzer nebeneinander angeordnet und mit sich in Querrichtung erstreckenden Gratleisten verbunden sind, wobei die Gratleisten in passenden Nuten der Hölzer aufgenommen sind.

Es sind Leichtbauplatten aus Holz bekannt, die aus einer Schicht, vorzugsweise aber aus mindestens zwei flächig aneinander liegenden Schichten mit seitlich aneinander gebundenen Brettern aufgebaut sind, wobei mindestens die Bretter einer Schicht Hohlräume insbesondere Nuten in mindestens einer Hauptfläche aufweisen. Beispiele für die Herstellung von genuteten Bretter und daraus aufgebauten Leichtbauplatten sind aus den Patentschriften AT 507 231 B1, AT 505 855 B1, AT 505 486 B1, AT 503 236 B1, AT 508 154 B1, WO 2013160313, EP 1 288 386 A1 und WO 95/32082 A1 bekannt.

WO 95/32082 A1 beschreibt ein Holzbauelement mit aneinander gebundenen Schichten, wobei die Schichten aus Brettern aufgebaut sind, die an einander zugewandten Hauptflächen je eine Rillierung aufweisen. Die Bretter zweier direkt aneinander anliegenden Schichten sind zueinander quer bzw. diagonal ausgerichtet. Bei den Kontaktflächen aneinander anliegender Schichten kann in von Rillen gebildeten gegen aussen im Wesentlichen abgeschlossenen Hohlräumen Fremdstoff in der Form eines Schaum-Leim-Gemisches als Füllstoff angeordnet sein.

AT 509 157 A1 beschreibt ein Verbundelement bei dem zwischen zwei Holzelementen mit Vertiefungen ein Füllmaterial so eingeschäumt wird, dass die Vertiefungen in den an das Füllmaterial angrenzenden Seiten der Holzbauelemente mit Füllmaterial ausgefüllt sind. Dieses Dokument zeigt eine Leichtbauplatte gemäß dem Oberbegriff des Anspruchs 1 und ein Verfahren zur Herstellung eines Leichtbauelements gemäß dem Oberbegriff des Anspruchs 9.

DE 195 23 131 A1 beschreibt eine Wand in Holzrahmen-Bauweise, welche Platten für den Innen- Trockenausbau, gebundene Holzfaserplatten, eine Verschalung aus Brettern und Dämmmaterial beispielsweise Korkplatten umfasst. Diese Wand ist sehr schwer und hat im Verhältnis zum Materialaufwand geringe Wärmedämmeigenschaften. DE 198 53 497 A1 beschreibt Wandelemente und DE 197 57 344 A1 Hüllen mit darin angeordneten verpressten Holzspänen.

EP 1 674 224 B1 beschreibt die Herstellung von Holzfaser-Dämmstoffelementen, bei der auf ein Vorvlies Kunststoffgranulat verteilt wird und anschliessend das Vorvlies zerfasert, gemischt und auf ein Transportband aufgebalsen wird. Mit dem anschliessenden Erhitzen und Kühlen soll das eingemischte Kunststoffgranulat eine Verklebungen der Holzfasern erzielen. Trotz des un- erwünscht grossen Bearbeitungs- und Energieaufwan- des kann kaum eine genügende Homogenität gewährleistet werden. Die Isoliereigenschaft des entstehenden Dämmstoffes verhindert ein genügend schnelles Erzielen einer homogenen Temperaturverteilung im zu verklebenden Material. Die für die Verklebung nötige hohe Temperatur schliesst die Wahl von hitzeempfindlichen, insbesondere äusserst trockenen dünnen Holzfasern aus. Zudem kann der beim Abkühlen auftretende Schwund noch nicht genügend feste Bindungen zerstören.

EP 1 027 505 B1 beschreibt die Herstellung von Dämmstoff aus organischem Fasermaterial. Das Herstellen eines Faserbreis, das Waschen und Trockenen sowie das erneute Zerfasern ist mit grossem Bearbeitungs- sowie Energieaufwand und grossen Mengen Abwasser verbunden. Das Zusetzen des Klebemittels auf Cellulosebasis ist nur schwer in der nötigen gleichmässigen Verteilung möglich.

WO 2011/015714 beschreibt ein Faser-Isoliermaterial das synthetische Bindungsfasern mit Längen von mindestens 30mm umfasst, welche mindestens zehnmal grösser sind als die damit verbundenen organischen Fasern. Bei diesen grossen Längenunterschieden ist es schwierig die Bindungsfasern genügend homogen einzubringen. Die hohen Schmelztemperaturen von über 200°C schränken die verwendbaren organischen Fasern stark ein. Zudem können die beschriebenen Polymere bei der Erhitzung auch giftige Gase freisetzen.

DE 10 2004 025 323 A1 beschreibt die Zerspanung von Schnittholzpaketen mit auf der Seitenfläche einer drehenden Scheibe angeordneten Schneidmessern. Das entstehende Produkt besteht aus Holzteilchen, die nicht geeignet sind für die Herstellung von leichtem Isoliermaterial bzw. Wärme-Dämmstoff.

Die bei der spanabhebenden Holzbearbeitung entstehenden Holzspäne und das Sägemehl werden mit grossem Energieaufwand zerkleinert und zu Pellets gepresst. Durch den zusätzlichen Energieaufwand für die Bearbeitung wird der verbleibende Energiewert der Holzspäne in den Pellets stark reduziert.

Die erfindungsgemässe Aufgabe besteht nun darin eine einfache Lösung zu finden, mit der Baumaterial mit kleinem Aufwand so hergestellt werden kann, dass es gute Belastungseigenschaften und/oder gute Wärmedämmeigenschaften aufweist, wobei das benötigte Material aus möglichst wenigen unterschiedlichen Quellen stammen soll.

Die Aufgabe wird durch Leichtbauplatten mit den Merkmalen des Anspruches 1, durch das Verfahren zum Herstellen eines Leichtbauelementes nach Anspruch 9 und durch die Verwendung dieser Leichtbauelemente und/oder -platten zum Erstellen eines Hauskörpers nach Anspruchs 13 gelöst.

Ein erfindungsgemässes Leichtbauelement umfasst mindestens eine Leichtbauplatte gemäß Anspruch 1 und eine der Leichtbauplatte zugeordneten Lage aus Dämmstoff, wobei die mindestens eine Leichtbauplatte Bretter umfasst, welche bei zumindest einer ihrer Hauptflächen eine Schar parallel verlaufender Nuten aufweisen und in mindestens einer Schicht angeordnet sowie über Klebverbindungen miteinander verbunden sind. Die Lage aus Dämmstoff umfasst Holzspäne, die bei der Herstellung von Brettern mit Nuten für die Leichtbauplatte von Ausgangsbrettern abgetragen werden. Bei einem erfindungsgemässen Verfahren zum Herstellen eines Leichtbauelementes gemäß Anspruch 9 mit mindestens einer Leichtbauplatte, die Bretter mit zumindest einer Schar parallel verlaufender Nuten umfasst, und mit einer der Leichtbauplatte zugeordneten Lage aus Dämmstoff, werden zum Bereitstellen der Bretter mit Nuten, die zu mindestens einer Schicht der Leichtbauplatte zusammengefügt werden, von Ausgangsbrettern Holzspäne abgetragen und zumindest teilweise zur Herstellung der Lage aus Dämmstoff verwendet.

Bei einer erfindungsgemässen Verwendung gemäss Anspruch 13 werden Leichtbauelemente mit mindestens einer Leichtbauplatte und Dämmstoff mit Holzspänen, die bei der Herstellung der Leichtbauplatte anfallen, formschlüssig aneinander anliegend und mit Verbindungs- und/oder Spannelementen zusammengehalten in einem Hauskörper verwendet.

Eine erfindungsgemässe Leichtbauplatte gemäss Anspruch 1 umfasst Bretter oder Abschnitte von Brettern (6), welche Bretter bzw. Abschnitte bei zumindest einer ihrer Hauptflächen eine Schar parallel verlaufender Nuten aufweisen und in mindestens einer Schicht angeordnet sowie über Klebverbindungen miteinander verbunden sind, wobei bei zumindest einem Teil der Nuten der Bretter bzw. Abschnitte der mindestens einen Leichtbauplatte die Nutbreite von der Hauptfläche weg gegen das Innere des Brettes bzw. Abschnittes hin grösser wird und entsprechend die zwischen diesen Nuten ausgebildeten Stege aus Holz vom Innern des Brettes bzw. Abschnittes gegen die Hauptfläche breiter werden sowie bei der Hauptfläche eine breite Stegfläche aufweisen. Ein vorteilhafter Dämmstoff umfasst Holzspäne, die bei der Herstellung von Brettern mit Nuten von Ausgangsbrettern abgetragen werden, wobei die Holzspäne im Wesentlichen streifenförmig sowie flach, gewellt, rollenförmig, federförmig oder spiralförmig ausgebildet sind und zumindest 80 Gewichtsprozent der Holzspäne des Dämmstoffs von Spänen mit einer Länge im Bereich von 2mm bis 40mm gebildet werden. Die Holzspäne bilden zusammen mit einem Bindemittel eine im Wesentlichen zusammenhängende Struktur. Das Bindemittel umfasst zumindest einen Anteil eines organischen Binders und/oder eines anorganischen Binders, wobei der organische Binder vorzugsweise ein Polymerbinder, insbesondere Polyvinylacetat (PVAc), und der anorganischer Binder vorzugsweise ein Binder auf der Basis von Alkali-Polysilikaten, insbesondere eine Mischung von Natriumsilikat und/oder Kaliumsilikat mit Lithiumsilikat ist.

Diese Erfindungsgegenstände umfassen eine gemeinsame erfinderische Idee. Beim Lösen der Aufgabe wurde in einem erfinderischen Schritt erkannt, dass ausgehend von trockenen Brettern gleichzeitig gezielt zwei unterschiedliche Komponenten hergestellt werden können, welche zum Erstellen eines erfindungsgemässen Leichtbauelementes wieder kombiniert werden. Die erste Komponente wird von Brettern mit bei deren Hauptflächen ausgebildeten parallelen Nuten und die zweite Komponente von dem bei der spanabhebenden Bearbeitung insbesondere bei der Bildung der Nuten abgetragenen Material gebildet. Das Gewicht der Bretter wird mit dem Ausbilden der Nuten um das Gewicht des abgetragenen Materials reduziert. Die dabei reduzierte Stabilität der einzelnen Bretter wird durch ihre Formgebung und ihre geeignete gegenseitige Anordnung und Verbindung bzw. Verklebung in einer Leichtbauplatte in einer gewünschten Weise aufgebaut. Die zweite Komponente, das abgetragene Material, wird als leichtes Isoliermaterial bzw. Dämmstoff ausgebildet und im Kontakt zu Leichtbauplatten so angeordnet, dass die Kombination mindestens einer Leichtbauplatte mit dem beim Ausbilden von Nuten der Bretter für Leichtbauplatten erzeugten Dämmstoff ein stabiles und wärmedämmendes Leichtbauelement bildet.

Beim Zusammenstellen von Leichtbauplatten werden vorzugsweise mindestens zwei Schichten mit seitlich aneinander gebundenen genuteten Brettern bei aneinander anliegenden Hauptflächen miteinander verklebt, wobei die Nuten in den aneinander anliegenden Hauptflächen zweier Schichten insbesondere unter einem Winkel zueinander verlaufen. Weil die Nuten Schwächungslinien der Bretter bzw. Schichten bilden, sind die genuteten Bretter bzw. genuteten Schichten bezüglich mechanischer Belastungen quer zu den Nutlängsrichtungen geschwächt. In Richtung der Nutlängsrichtungen gewährleisten die beidseits der Nuten bis zu den Hauptflächen ausgebildeten Stege eine weiterhin hohe Stabilität.

Die Ausrichtungen der Bretter bzw. der Nuten zweier direkt aneinander anschliessender Schichten werden so gewählt, dass die Belastbarkeit der Leichtbauplatten deren Verwendung entspricht. Wenn die Belastbarkeit in der Längsrichtung der Leichtbauplatten möglichst gross sein muss, so wird zwischen den Nutlängsrichtungen direkt aneinander anschliessender Schichten ein spitzer Winkel von mindestens 25° gewählt. Wenn die Belastbarkeit auch in der Querrichtung der Leichtbauplatten gross sein soll, so wird zwischen den Nutlängsrichtungen direkt aneinander anschliessender Schichten ein Winkel von 90° gewählt. Für viele Anwendungen sind Winkel im Bereich zwischen 25° und 90° insbesondere die Winkel 45° und im Wesentlichen 60° bzw. 30° bevorzugte Winkel zwischen den Nutlängsrichtungen direkt aneinander anschliessender Schichten.

Das bei der Bearbeitung der Bretter, insb. das bei der Bildung der Nuten, abgetragenen Material, bzw. die zweite Komponente, wird direkt beim Abtragen auf die Funktion als Isoliermaterial bzw. Dämmstoff hin optimiert. Dazu wird eine spanende Bearbeitung eingesetzt bei der im Wesentlichen streifenförmige Späne abgetragen werden. Die abgetragenen Späne weisen eine Verteilung von Spanlängen und eine Verteilung von Spanmächtigkeiten auf. Das Abtragen der Späne wird darauf ausgelegt, dass mit den Spänen ein Dämmstoff gebildet werden kann, der nach der Anordnung im Leichtbauelement einen grossen Hohlraumanteil mit starker Unterteilung bereitstellt, stabil bleibt und Feuchtigkeit möglichst wenig zurückhält.

Bei der spanenden Bearbeitung unterscheiden sich die Späne in ihrer Grössenzusammensetzung entsprechend der verwendeten Bearbeitungstechnik, der verwendeten Holzart und der gewählten Richtung der Nuten relativ zur Faserrichtung der Bretter. Die Nuten werden vorzugswiese mit Kreissägeblättern ausgebildet. Dabei kann der Durchmesser der Kreissägeblätter, der Abstand der Sägezähne, die Form der Sägezähne, die Umfangsgeschwindigkeit der Sägezähne und die relative Vorschubgeschwindigkeit zwischen einem bearbeiteten Brett und dem mindestens einen Kreissägeblatt so gewählt werden, dass Späne mit der gewünschten Grössenzusammensetzung entstehen.

Weil in einer Hauptfläche eines Brettes mehrere, insb. mindestens vier, Nuten angeordnet werden, können diese mit mehreren von einander beabstandet auf einer gemeinsamen Welle angeordneten Kreissägeblätter parallel ausgebildet werden. Wenn Nuten bei beiden Hauptflächen der Bretter ausgebildet werden, so wird jeder Brett-Hauptfläche je eine Welle mit mehreren Kreissägeblättern zugeordnet.

Der Eingriff der Kreissägeblätter bzw. deren Zähne in die Bretter entspricht vorzugsweise der gewünschten Nuttiefe, so dass die Nut in einem Arbeitsschritt ausgebildet werden kann. Gegebenenfalls wird die Nut in mehr als einem Schritt ausgebildet, wobei jeder Teilschritt einen Anteil der Nut, insb. der Nuttiefe, abträgt.

Ein neu in das Brett eingreifender Zahn eines drehenden Kreissägeblattes trägt auf seinem gesamten Weg bis zum Austritt aus dem Brett Holz ab, wobei das abgetragene Holz einen Span bildet. Die Span-Länge hängt von der Krümmung des Aussenrandes des Kreissägeblattes und von der Nuttiefe bzw. der Tiefe des Eingriffs des Kreissägeblattes in das Brett ab. Die Span-Breite hängt von der Breite der Zähne des Kreissägeblattes ab. Die Span-Mächtigkeit bzw. eine Ausdehnung senkrechte zur Spanlängsausdehnung und zur Spanbreite hängt von der relativen Vorschubgeschwindigkeit zwischen einem bearbeiteten Brett und dem mindestens einen Kreissägeblatt, vom Abstand (Zentrumswinkel bzw. Umfangsabschnitt) zwischen aufeinanderfolgenden Zähnen und von der Drehzahl des Kreissägeblattes ab.

Bevorzugt werden Zähne eingesetzt, die mit geraden Schneidlinien flache streifenförmige Späne erzeugen, welche nach dem Abtrennen und der Bewegung durch den dem jeweiligen Zahn zugeordneten Freiraum im Kreissägeblatt häufig eine gewellte Form aufweisen. Wenn Zähne eingesetzt werden, welche gekrümmte Schneidlinien aufweisen, so weisen die entstehenden Späne quer zu Ihrer Längsausdehnung eine gekrümmte Form auf, was dazu führt, dass an den Spänen konkave Hohlräume ausgebildet sind. Gegebenenfalls werden die Schneidlinien auch so ausgebildet, dass rollen-, feder- oder spiralförmige Späne entstehen, die ebenfalls Innenräume, bzw. Hohlräume zumindest teilweise umschliessen.

Späne können während des Abtragens auch brechen, wobei die entstehenden Teilspäne je einen Abschnitt der maximal zu erwartenden Spanlänge bilden. Ob die Späne brechen oder nicht hängt unter anderem von der Form und Schärfe der Zähne und der ihnen in Drehrichtung je vorausgehenden Freiräume im Kreissägeblatt ab. Zudem spielt auch die Art des Holzes und die Ausrichtung der Nut relativ zur Brettlängsrichtung bzw. zur Längsrichtung der Holzfasern eine Rolle. Um möglichst viele Späne in ihrer erzielbaren Gesamtlänge herzustellen, werden die Längsrichtungen der Nuten parallel zur Längsrichtung der Bretter ausgelegt und Trennsägeblätter mit scharfen Zähnen und den entstehenden Spänen entsprechenden Freiräumen vor den Zähnen eingesetzt. Wenn nur wenige Späne brechen, so ist der Feinanteil im abgetragenen Dämmstoff sehr klein und die Spanlängenverteilung eng.

Um aus dem abgetragenen Material einer Nut möglichst viele Späne zu bilden, wird die Span-Mächtigkeit möglichst klein gewählt, wobei eine minimale Mächtigkeit nicht unterschritten werden soll, damit die Späne noch genügen stabil sind und über einen möglichst grossen Längenbereich eine im Wesentlichen konstante Span-Breite aufweisen. Wenn aus einem vorgegebenen Nutvolumen eine hohe Anzahl von Spänen herausgeholt wird, so ermöglichen diese vielen Späne im Dämmstoff die Bildung von vielen von Spänen umschlossenen Teilräumen, in denen kleine teilweise abgeschlossenen Luftmengen eine hohe Wärme-Dämmwirkung erzielen. Das spezifische Gewicht eines stark wärmedämmenden Dämmstoffes ist bei Spänen mit kleiner Mächtigkeit sehr klein. Das heisst, dass für die Herstellung eines bestimmten Volumens des Dämmstoffes nur eine kleine Holzmenge benötigt wird.

Beim Bearbeiten der Bretter für die Produktion von Leichtbauplatten werden nicht nur bei der Nutbildung Späne erzeugt. Die Hauptflächen werden gehobelt und die Seitenflanken mit einer Kehlmaschine bearbeitet. An den Seitenflanken der Bretter werden mit spanabhebenden Bearbeitungen Nuten und Federn ausgebildet, damit die zu einer Schicht zusammengefügten Bretter durch die Nut-Feder-Verbindung einen guten Zusammenhalt gewährleisten. Die Nut- und Feder-Verbindungen zwischen den Brettern einer Schicht haben den zusätzlichen Vorteil, dass die Schichten nach dem Verleimen der Seitenflanken der Bretter schneller belastbar sind und die Bretter der Schicht bündig entlang einer Ebene verlaufen. Die Bretter oder die Schichten werden zudem plan gehobelt, wobei weiteres Spanmaterial entsteht.

Bei der Herstellung von Leichtbauplatten mit genuteten Brettern bzw. Schichten verbleibt vom gesamten Holzvolumen der verwendeten Ausgangsbretter ca. 40% in der Leichbauplatte, 60% fällt als abgetragenes Restmaterial in der Form von Spänen an. Für die Herstellung der Leichtbauplatten wird Prozesswärme für die Produktion (Holztrocknung, Wärmebehandlung beim Verleimen der Schichten sowie beim Aushärten des Binders im Dämmstoff) und gegebenenfalls für das Heizen der Produktionsräume benötigt. Zur direkten Erzeugung der Prozesswärme oder gegebenenfalls mit dem Einsatz eines Blockheizkraftwerks zur kombinierten Erzeugung von Wärme und elektrischer Energie wird ein Anteil des abgetragenen Restmaterials verwendet, beispielsweise ca. 25%. Der verbleibende Anteil von ca. 75% des Restmaterials kann für die Produktion von Dämmstoff verwendet werden. Diese Anteilszahlen können an die jeweiligen Bedürfnisse angepasst werden.

Ausgehend von $1m^3$ Holz in der Form von rohen Brettern mit einem Gewicht von ca. 450kg gelangt ca. 180kg dieses Holzmaterials in die Leichtbauplatte. Weil der Hohlraumanteil der Leichtbauplatte aufgrund der Nuten bei ca. 40% liegt, kann davon ausgegangen werden, dass das Volumen der Leichtbauplatte mit einem Gewicht von 180kg bei ca. $0.56m^3$ liegt. Vom abgetragenen Restmaterial mit dem Gewicht von ca. 270kg wird ca. 200kg für die Produktion von Dämmstoff eingesetzt. Weil die Dichte des Dämmstoffs bei ca. 60 bis $90kg/m^3$ liegt und davon ein grosser Anteil von den Holzspänen sowie ein kleiner Anteil, beispielsweise ca. 10%, von Bindemittel gebildet wird, ergibt sich ein Volumen des Dämmstoffs von ca. $2.5m^3$ bis $3.5m^3$. Wenn nun alles aus $1m^3$ Holz entstehende Material nach dem Abzug von ca. 70kg, dessen Energie für die Produktion verwendet wird, in der Form der Leichtbauplatte und des Dämmstoffes zusammengestellt wird, so entsteht ein verbaubares Volumen von $3m^3$ bis $4m^3$. Weil nur ein Teil der Leichtbauelemente für ein Haus Dämmstoff umfassen, wird meist nur ein Teil der entstehenden Holzspäne zusammen mit den aus dem gleichen Holz gebildeten Leichtbauelementen verwendet. Der verbleibende Teil kann als Dämmstoff getrennt von den Leichtbauelementen eingesetzt oder gegebenenfalls als Energieträger verwendet werden. Die Verwendung als Energieträger ist aber weniger effizient, weil beispielsweise bei der Pellet-Herstellung für die Verarbeitung noch viel zusätzliche Energie aufgewendet werden muss.

Für das Abtragen von langen Spänen wird ein Kreissägeblatt mit einem möglichst grossen Durchmesser gewählt, bei dem aufgrund der schwachen Krümmung des Kreissägeblatt-Aussenrandes ein langes Segment seines Aussenrandes im Brett bzw. in der entstehenden Nut aufgenommen ist. Wenn die Nuttiefe wählbar ist, so wird diese grösser gewählt, wenn lange Späne erwünscht sind. Für das Abtragen von kurzen Spänen wird ein Kreissägeblatt mit einem möglichst kleinen Durchmesser gewählt, bei dem ein kurzes Segment seines Aussenrandes bzw. Umfangs im Brett aufgenommen ist. Wenn die in einem Bearbeitungsschritt herausgearbeitete Nuttiefe wählbar ist, so wird diese kleiner gewählt, wenn kleine Späne erwünscht sind.

In einer besonders vorteilhaften Ausführungsform werden die aus den nebeneinander verlaufenden Nuten eines Brettes abgetragenen Späne verschieden lang ausgebildet. Gemäss einer ersten Ausführungsform werden dazu die Nuten verschieden tief ausgebildet. Unterschiedlich tiefe Nuten können dann besonders vorteilhaft eingesetzt werden, wenn in den Brettern auf beiden Hauptflächen Nuten ausgebildet werden. Damit der gesamte Nuthohlraum im Brett aufgrund der unterschiedlich tiefen Nuten nicht kleiner werden muss, können die auf den beiden Hauptflächen einander jeweils gegenüberliegenden Nuten zusammen eine konstante Summe der Einzeltiefen aufweisen. Wenn also die Nut bei einer ersten Hauptfläche nur eine kleine Tiefe hat, so kann die ihr gegenüberliegende Nut bei der zweiten Hauptfläche eine grosse Tiefe haben. Der Holzbereich zwischen diesen Nuten wird dann jeweils eine gewünschte minimale Mächtigkeit aufweisen. Wenn nun die Nuttiefen bei der ersten Hauptfläche von den Seitenflanken des Brettes gegen die Brettmitte zunehmen, so nehmen die Nuttiefen bei der zweiten Hauptfläche von der Brettmitte gegen die Seitenflanken des Brettes zu.

Gemäss einer zweiten besonders vorteilhaften Ausführungsform zur Herstellung von verschieden langen Spänen aus den nebeneinander verlaufenden Nuten eines Brettes werden Kreissägeblätter mit unterschiedlichen Durchmessern verwendet. Wenn alle Nuten eines Brettes mit verschieden grossen Kreissägeblättern hergestellt werden, so ergibt sich aus allen Nuten zusammen ein Spänegemisch dessen Spanlängenverteilung breiter ist als bei der Herstellung von Spänen mit alles gleichen Kreissägeblättern. Jedes unterschiedlich grosse Kreissägeblatt erzeugt Späne mit einer engen Längenverteilung. Weil die Maxima dieser Längenverteilungen entsprechend dem jeweiligen Kreissägeblatt-Durchmesser bei unterschiedlichen Spanlängen liegen, ist die aus der Summe der Einzelverteilungen gebildete Gesamtverteilung wesentlich breiter. Ein Spangemisch mit Spanlängen die über einen gewünschten Längenbereich verteilt sind, kann eine komplexere Hohlraumstruktur gewährleisten als Späne, die alle im Wesentlichen die gleiche Länge aufweisen.

Damit über die Brettbreite verteilt Kreissägeblätter mit unterschiedlichen Durchmessern effizient eingesetzt werden können, wird in einer bevorzugten Ausführungsform eine zur zu bearbeitenden Hauptfläche der Bretter in einem ersten spitzen Wellen-Winkel α ausgerichtete erste Welle verwendet, auf der in vorgegebenen Abständen Kreissägeblätter mit zunehmendem Druchmesser angeordnet sind. Die erste Welle liegt in einer Ebene, welche senkrecht auf der Hauptfläche der Bretter steht und senkrecht zu den Längsachsen der Nuten ausgerichtet ist. Der Winkel zwischen der ersten Welle und der Hauptfläche sowie die Durchmesser der Kreissägeblätter und ihre Position auf der ersten Welle werden vorzugsweise so aufeinander abgestimmt, dass alle Kreissägeblätter im Wesentlichen gleich tiefe Nuten ausbilden. Aufgrund der schiefgestellten Welle ist zwischen den Ebenen der Kreissägeblätter und der Hauptfläche ein erster Scheiben-Winkel β ausgebildet, wobei folgendes gilt:

$$\beta = 90° - \alpha$$

Entsprechend der Neigung der Kreissägeblätter bzw. des Scheiben-Winkels β ist auch zwischen den seitlichen Randflächen der entstehenden Nuten und der Hauptfläche des Brettes der Scheiben-Winkel β ausgebildet. Damit die Nuten in Schnittebenen senkrecht zur Nutlängsrichtung nicht die asymmetrisch Form beibehalten, wird vorzugsweise der gleichen Hauptfläche eine zweite Welle mit Kreissägeblättern zugeordnet, welche unter einem zweiten spitzen Wellen-Winkel a' zur Hauptfläche der Bretter ausgerichtet ist. Diese zweite Welle mit Kreissägeblättern ist bezügliche einer senkrecht auf der Hauptfläche stehenden die zentrale Längsachse des Brettes umfassende Spiegelebene gespiegelt zur ersten Welle mit den Kreissägeblättern ausgerichtet und zusätzlich in Brettlängsrichtung etwas versetzt zur ersten Welle angeordnet.

Die beiden Wellen mit den Kreissägeblättern sind so aufeinander abgestimmt, dass nach der Bearbeitung der Hauptfläche mit beiden Wellen im Wesentlichen symmetrische Nutquerschnitte vorliegen, wobei die Nutbreite von der Hauptfläche weg gegen das Innere des Brettes hin grösser wird. Die Nutöffnung bei der Hauptfläche entspricht mindestens der Ausdehnung der Kreissägeblätter in der Hauptfläche senkrecht zur Nutlängsrichtung. Zwischen den Nuten bleiben Stege aus Holz stehen, welche vom Innern des Bretts gegen die Hauptfläche breiter werden und bei der Hauptfläche eine breite Stegfläche aufweisen.

Diese breiten Stegflächen gewährleisten beim Zusammenstellen von Leichtbauplatten, bzw. beim Verkleben von zwei Schichten mit seitlich aneinander gebundenen genuteten Brettern, genügend grosse Kontaktflächen für eine stabile Klebeverbindung und dies auch unabhängig vom Winkel zwischen den Nuten in den aneinander anliegenden Hauptflächen der beiden Schichten. Bei Feuchtigkeitsänderungen sind die damit verbundenen Quell- und Schwundverformungen in den miteinander verklebten Stegen aufgrund der unterschiedlichen Stegausrichtung in verschiedenen Richtungen maximal. Die Unterschiede beim Quellen und Schwinden ergeben sich dadurch, dass diese Eigenschaften bei einem Baumstamm sehr unterschiedlich sind. Die Ausdehnungsänderungen liegen in Stammlängsrichtung bzw. axial bei 0.1 bis 0.3%, radial bei 1 bis 3% und tangential bei 3 bis 6%. Wenn nun Brettbereiche mit einem tangentialen Schwundverhalten an Brettbereichen mit einem axialen Schwundverhalten befestigt sind, so können sich die prozentualen Längenänderungen um den Faktor 20 unterscheiden. Die grossen klebenden Kontaktflächen zwischen Stegen der beiden Schichten können die auftretenden Kräfte aufnehmen, ohne dass sich die Leichtbauplatte verformt, bzw. ohne dass sich Spannungsrisse bilden.

Wenn nach der Bearbeitung einer Hauptfläche eines Brettes mit zwei spiegelbildlich angeordneten schiefgestellten Wellen mit unterschiedlich grossen Kreissägeblättern in den Mitten der Nuten an den Nutgründen noch vorstehende zentrale Stege ausgebildet sind, so können diese für einzelne Anwendungen vorteilhaft sein, für andere Anwendungen werden sie aber entfernt. Zum Entfernen werden gleich grosse Kreissägeblättern eingesetzt, die in entsprechenden Abständen an einer parallel zur Hauptfläche und senkrecht zur Nutlängsrichtung verlaufenden Welle angeordnet sind. Nach dem Entfernen der zentralen Stege entstehen Nuten deren Hohlraumanteil von der jeweiligen Hauptfläche aus gegen innen zunimmt, bis zu einer zentralen zusammenhängenden Holzschicht. Es versteht sich von selbst, dass die zentralen Bereiche der Nuten auch vor den seitlichen abgetragen werden können.

Die zentrale zusammenhängende Holzschicht kann Kräfte aufnehmen, welche über die Seitenflanken ins genutete Brett eingetragen werden. Nach der Verleimung von Schichten mit verschieden ausgerichteten Nuten, werden diese Querkräfte von den Stegen der angrenzenden Schicht aufgenommen, weil diese Stege quer zu den Seitenflanken der Bretter der ersten Schicht verlaufen oder bei parallelen Brettern vorzugsweise die Nutöffnungen überdecken. Wenn die genuteten Bretter in Leichtbauplatten mit mindestens zwei Schichten eingesetzt werden, kann die zusammenhängende Holzschicht so minimal ausgebildet werden, dass sie im Wesentlichen nur die Steganordnungen beim Bretttransport zum Herstellen der Leichtbauplatte zusammenhält.

Damit ein Brett mit einem möglichst grossen gesamthaften Nutvolumen entsteht, werden in einer bevorzugten Ausführungsform die beschriebenen Nutformungsschritte bei beiden Hauptflächen durchgeführt. Dazu werden wieder zwei spiegelbildlich unter einem spitzen Winkel zur zweiten Hauptfläche verlaufende Wellen mit unterschiedlich grossen Kreissägeblättern und insbesondere eine parallel zur zweiten Hauptfläche verlaufende Wellen mit gleich grossen Kreissägeblättern eingesetzt. Die Anordnung wird insbesondere so gewählt, dass im Brettquerschnitt die von der zentralen zusammenhängenden Holzschicht beidseitig wegführenden Stege zu einer Mittelebene im Wesentlichen gespiegelt ausgebildet sind. So können Druckkräfte, die über die breiten Stegflächen von den Stegen bei der ersten Hauptfläche aufgenommen werden, in der Mitte des Brettes direkt an die Stege übertragen werden, die sich gegen die zweite Hauptfläche erstrecken. Bei dieser Anordnung genügt vorzugsweise eine zentrale zusammenhängende Holzschicht mit einer Mächtigkeit von lediglich 5 bis 15% der Mächtigkeit des Brettes. Diese auf hohe Druckbelastungen der Hauptflächen ausgelegten Ausführungen eignen sich beispielsweise für Leichtbauelemente, die für Böden bzw. Decken eingesetzt werden.

Gegebenenfalls sind aber die Stege bei beiden Hauptflächen gegeneinander verschoben, so dass den Stegen bei der ersten Hauptfläche Nuten bei der zweiten Hauptfläche zugeordnet sind. Damit Druckkräfte gut von einer Hauptfläche zur anderen übertragen werden können, ist der zentrale Holzbereich so ausgebildet, dass sich die Kräfte von einem Steg der ersten Hauptfläche möglichst optimal auf zwei benachbarte Stege der zweiten Hauptfläche aufteilen bzw. übertragen. Dazu braucht die zentrale zusammenhängende Holzschicht eine entsprechende Ausformung und insbesondere mehr Material, wobei die jeweils gewählte Ausformung auf gewünschte Verformungseigenschaften der Leichtbauplatte ausgerichtet werden kann. Für Gebäudewände in erdbebengefährdeten Gebieten ist es vorteilhaft, wenn hohe Verformungsenergien nicht zum vollständigen Brechen der Leichtbauplatte führen, sondern in den Platten grosse Verformungen erzeugen, insbesondere mit lokalen Materialbrüchen bei der zentralen zusammenhängenden Holzschicht, welche grosse Energieanteile dämpfend aufnehmen können.

Bei Nuten in Längsrichtung der Bretter erstrecken sich die Stege parallel zur Längsrichtung der Holzfasern, was die Stabilität der Stege erhöht. Es ist auch möglich eine zweite Schar paralleler Nuten in einem spitzen Winkel zur ersten Schar von Nuten auszubilden. Dadurch werden die Stegflächen zwischen den ersten Nuten und natürlich auch die Stege unterbrochen. Beim Zusammenstellen von Leichtbauplatten, bzw. beim Verkleben von zwei Schichten mit seitlich aneinander gebundenen genuteten Brettern je mit in einem spitzen Winkel zueinander verlaufenden Nutscharen sind immer noch genügend grosse Kontaktflächen für eine stabile Klebeverbindung vorhanden. Die Klebeverbindungen zusammen mit den daran anschliessenden Stegen bzw. Stegabschnitten bilden bei ununterbrochenen Stegen eine Gitterstruktur mit grossen Verbindungslängen und bei unterbrochenen Stegen eine netzartige Struktur mit kürzeren Verbindungslängen.

Die Kombination der von den Klebeverbindungen und den Steganordnungen gebildeten Stabilitätsstruktur und der bei den Nutgründen und der zentralen zusammenhängenden Holzschicht gebildeten Verformungsmöglichkeiten kann optimal an die gewünschten Ansprüche angepasst werden.

Wenn zwei Schichten mit Nuten, gegebenenfalls bei mindestens einer Hauptfläche mit zwei gekreuzten Scharen von Nuten, verklebt werden, sind die Klebeverbindungen Teilbereiche der Schichtoberfläche in denen die zwischen den Nuten vorstehenden Stege der beiden verbundenen Schichten mit ihren Stegflächen aneinander anliegen. Es gibt keine grossflächige bzw. zusammenhängende Leimschicht, welche die Feuchtigkeitsdurchlässigkeit senkrecht zur Schichtoberfläche unerwünscht einschränken könnte. In der Nähe der Klebeverbindungen bzw. der Stegflächen gibt es die von den Nuten gebildeten Hohlräume. Wenn Biegekräfte auf die Leichtbauplatte einwirken, so führen diese beim Überschreiten einer Elastizitätsgrenze nicht zum plötzlichen Brechen der Leichtbauplatte, sondern lokal werden Stege in die verdichtbaren Hohlräume umgeformt. Diese kleinen inneren Umformungen und Brüche bzw. Verschränkungen können sehr viel Energie aufnehmen, ohne dass die Leichtbauplatte bricht. Die Leichtbauplatte hat eine hohe Elastizität und auch nach einer hohen Aufnahme von Verformungsenergie sowie einem damit einhergehenden starken Durchbiegen immer noch eine hohe verbleibende Biegefestigkeit.

Wenn eine Leichtbauplatte aus mehr als zwei Schichten aufgebaut wird, werden die beiden Aussenschichten in einer bevorzugten Ausführungsform anders aufgebaut als dazwischenliegende Innenschichten. Die Innenschichten können bezüglich Stauchen und Strecken eine kleinere Stabilität und entsprechend einen grösseren Hohlraumanteil aufweisen als die Aussenschichten, weil auch dann die Innenschichten gewährleisten, dass die Stauch- und Streck-Belastung der Gesamtplatte im Wesentlichen auf die beiden Aussenschichten aufgeteilt wird. Die Innenschichten müssen aber gewährleisten, dass der Abstand zwischen den Aussenschichten im Wesentlichen unverändert bleibt. Dazu müssen Sie eine genügend grosse Druckbelastbarkeit senkrecht zur Hauptfläche aufweisen. Eine optimale Auslegung der Nutformen und Anordnungen in den verschiedenen Schichten kann mit Modellrechnungen an die erwarteten Belastungen angepasst werden.

Bei einer bevorzugten Ausführungsform wird bei mindestens einer Aussenfläche der Leichtbauplatte eine Schicht aus Brettern angeordnet, welche nur auf der gegen das Innere der Leichtbauplatte gerichteten Hauptfläche eine Schar von Nuten umfassen. An ihrer gegen das Äussere des Leichtbauelementes gerichteten Hauptfläche umfassen die Bretter entlang beider langen Seitenlinien angefräste Randbereiche, bzw. Fasen. Wenn die Leichtbauelemente mit den Brettern mit den angefrästen Randbereichen bzw. Fasen nach aussen gerichtet als Wandelement eingesetzt werden, so verlaufen angefrästen Randbereiche bzw. Fasen als kleine Rinnen schräg nach unten und können so das auf das jeweilige Brett treffende Regenwasser kontrolliert zur Seite ableiten, was eine unterschiedliche Benetzung und damit einen unterschiedlichen Bewuchs bzw. eine unterschiedliche Verfärbung der oberen und unteren Bereiche einer Wand verhindert.

Bei den aus Schichten mit Brettern aufgebauten Leichtbauplatten erstrecken sich die Bretter in Richtungen parallel zur Ebene die von der Längs- und der Querrichtung der Leichtbauplatte aufgespannt wird. Die kleinsten Längenänderungen beim Quellen und Schwinden ergeben sich in der Brettlängsrichtung bzw. in der Längsrichtung der Holzfasern, weil ja bei einem Baumstamm die Ausdehnungsänderungen in Stammlängsrichtung bzw. axial bei lediglich 0.1 bis 0.3% liegen. Entsprechend ergeben sich bei den beschriebenen Leichtbauplatten die minimalen Ausdehnungsänderungen in der Ebene der Leichtbauplatte. Senkrecht zur Ebene der Leichtbauplatte bzw. senkrecht zu den Hauptflächen der Bretter der Leichtbauplatte treten grössere Ausdehnungsänderungen auf, weil diese Richtung im gewachsenen Baum Komponenten in einer radialen Richtung und/oder einer tangentialen Richtung umfasst und die Ausdehnungsänderungen radial bei 1 bis 3% sowie tangential bei 3 bis 6% liegen. Für Anwendungen, bei denen unabhängig von der jeweiligen Umgebungsfeuchtigkeit die Aussenflächen bzw. die Hauptflächen der Leichtbauplatten möglichst genau in einer Ebene verbleiben sollen, müssen die Leichtbauplatten an diese zusätzliche Aufgabe angepasst werden.

Dazu werden in einer bevorzugten Ausführungsform von Leichtbauplatten, bei denen die Hauptflächen der Bretter parallel zur Aussenfläche der Leichtbauplatte ausgerichtet sind, mit Schnitten in Normalebenen zur Aussenfläche kurze Abschnitte gleicher Länge abgetrennt. Diese kurzen Abschnitte werden von zwei parallel verlaufenden Schnittflächen und senkrecht dazu von zwei Teilfläche der Aussenflächen der aufgeteilten Leichtbauplatten begrenzt. Die kurzen Abschnitte werden um 90° umgelegt, in einer Schicht nebeneinander angeordnet und jeweils mit den Teilflächen der Aussenflächen der aufgeteilten Leichtbauplatten in gegenseitige Verbindung gebracht, so dass sie eine Schicht aus Abschnitten, insbesondere eine Kernschicht, einer weiter optimierten Leichtbauplatte bilden. Beim Zusammenfügen werden aneinander anschliessende Abschnitte mit ihren Teilflächen der ursprünglichen Aussenflächen aneinander angelegt und dort vorzugsweise miteinander über Klebeverbindungen verbunden. Die Schnittflächen der zusammengefügten Abschnitte bilden nun die neuen Aussenflächen der Schicht aus Abschnitten.

In einer Schicht aus Abschnitten verlaufen die Längsrichtungen der Holzfasern nicht mehr im Wesentlichen parallel zur Schicht-Aussenfläche sondern quer dazu. Die effektive Ausrichtung hängt dabei von der Ausrichtung der Schnittebenen beim Abtrennen der Abschnitte relativ zu den Brettlängsrichtungen der verwendeten Leichtbauplatten ab.

In einer bevorzugten Ausführungsform umfasst die Leichtbauplatte, von der die Abschnitte abgetrennt werden, nur Bretter mit der gleichen Ausrichtung und die Schnittebene wird im Wesentlichen senkrecht zur Brettlängsrichtung ausgerichtet. Entsprechend wird die Längsrichtung der Holzfasern in einer Leichtbauplatte, die in der beschriebenen Weise aus Abschnitten einer Leichtbauplatte mit im Wesentlichen gleich ausgerichteten Bretter aufgebaut ist, im Wesentlichen senkrecht zu den Schicht-Aussenflächen einer Schicht aus solchen Abschnitten verlaufen. Entsprechend treten die kleinsten Längenänderungen beim Quellen und Schwinden in der Richtung senkrecht zu den Schicht-Aussenflächen auf und die Haupt- bzw. Aussenflächen der zumindest teilweise mit Abschnitten aufgebauten Leichtbauplatten verbleiben auch bei Feuchtigkeitsänderungen möglichst genau in einer Ebene.

Schichten aus Brettern mit Nuten, bei denen die Nutbreite von der Hauptfläche weg gegen das Innere des Brettes hin grösser wird, weisen zwischen den Nuten Stege auf, deren Stegfläche bei der Hauptfläche der Schicht breiter ist als die Nutöffnung. Wenn nun solche Schichten in gleicher Nut- bzw. Brettausrichtung miteinander verbunden werden, so können die Stegflächen die Zugangsöffnungen zu den Nuten überspannen, was aufgrund der Verleimung eine feste bzw. durchgängige Verbindungslage ergibt. Auf einen Winkel zwischen den Nuten der direkt aneinander anschliessenden Schichten kann verzichtet werden, ohne dass dabei die Stabilität der entstehenden Platte wesentlich eingeschränkt wird.

Wenn Schichten in gleicher Nut- bzw. Brettausrichtung so miteinander verbunden werden, dass die Stegflächen der beiden verbundenen Schichten im Wesentlichen genau aufeinander treffen, so ergibt sich eine grosse aber durch die Nutzugänge unterbrochene Klebverbindung. Weil die Bretter beim jeweiligen Grund ihrer Nuten eine zentrale zusammenhängende Holzschicht umfassen, entsteht trotz der gesamthaft grossen von je zwei Nuten gebildeten zusammenhängenden Hohlräumen eine für viele Anwendungen genügende Stabilität in der Leichtbauplatte. Insbesondere weisen auch abgetrennte Abschnitte dieser Leichtbauplatte eine für die weitere Verarbeitung nötige Stabilität auf.

Mit der oben beschriebenen bevorzugten Lösung, bei der die Holzfasern im Wesentlichen zur Deckschicht einen Winkel von 90° bilden, kann ein Nachteil der Lösung gemäss EP 1 913 211 B1 überwunden werden. Dort weisen die Längsrichtungen der Fasern zur Fläche der Deckschicht immer einen Winkel im Bereich von 25° bis 80° auf. Ein Winkel von 90° ist dort ausgeschlossen.

Wenn die Leichtbauplatte, von der die Abschnitte abgetrennt werden, mindestens zwei Schichten mit unterschiedlich ausgerichteten Brettern umfasst, so wird die Schnittebene vorzugsweise so gewählt, dass die Flächennormale der Schnittebene zu den unterschiedlichen Brettlängsrichtung möglichst kleine Winkel bildet. Entsprechend weichen die unterschiedlichen Längsrichtungen der Holzfasern mit möglichst kleinen Winkeln von der Richtung senkrecht zu den Schicht-Aussenflächen einer Schicht aus solchen Abschnitten ab. Die kleinsten Längenänderungen beim Quellen und Schwinden ergeben sich in der Richtungen, die etwas von der Richtung senkrecht zu den Schicht-Aussenflächen abweichen.

Die Haupt- bzw. Aussenflächen der zumindest teilweise mit Abschnitten aufgebauten Leichtbauplatten können bei Feuchtigkeitsänderungen Bewegungen ausführen, die etwas über den erzielbaren minimalen Bewegungen liegen.

Diese Lösung, bei der die Längsrichtungen der Holzfasern von der Richtung senkrecht zu den Schicht-Aussenflächen einer Schicht aus solchen Abschnitten abweichen, weist gegenüber der Lösung gemäss EP 1 913 211 B1 noch einen Vorteil auf. Bei der Lösung gemäss EP 1 913 211 B1 erstrecken sich die Nuten von einer Hauptfläche eines Brettes über den überwiegenden Teil der Mächtigkeit des Brettes, was beim Abtrennen der Abschnitte zu Stabilitätsproblemen führen kann. Bei der voliegenden Erfindung gewährleistet die zentrale zusammenhängende Holzschicht die für das Abtrennen nötige Stabilität.

An jeder neuen Aussenflächen einer Schicht aus Abschnitten kann eine weitere Schicht aus Abschnitten oder eine Deckschicht angeordnet bzw. festgeklebt werden. Mit einer Deckschicht kann die jeweils gewünschte Oberfläche bereitgestellt werden. Entsprechend sind alle als Deckschichten bekannten Materialien einsetzbar. Die zumindest teilweise aus Abschnitten von Leichtbauplatten aufgebauten Leichtbauplatten können nebst der Anwendung in Leichtbauelementen auch in Leichtbauplatten für Möbel und Inneneinrichtungen verwendet werden, wobei dann auch an den Stirnseiten Deckschichtelemente festgeklebt werden.

Bei Leichtbauplatten für Möbel und Inneneinrichtungen mit dünnen Deckschichten ist es problematisch, wenn es unter der Deckschicht Hohlräume mit grossen Durchmessern in allen Richtungen gibt, weil dort die Belastbarkeit der Deckschicht und die Befestigungsmöglichkeiten stark eingeschränkt sind. In einer bevorzugten Ausführungsform der Leichtbauplatte mit mindestens einer Schicht aus Abschnitten einer Leichtbauplatte mit Nuten, bei denen die Nutbreite von der Hauptfläche weg gegen das Innere des Brettes hin grösser wird, werden am Nutgrund in die Nut vorstehende Grate aus Holz stehen gelassen. Das heisst, dass beim Ausbilden dieser Nuten nur in zwei verschiedenen Richtungen schräg gestellte Kreissägeblätter eingesetzt werden und auf den Einsatz der senkrecht zur Hauptfläche der Bretter ausgerichteten Kreissägeblätter verzichtet wird. Entsprechend gibt es im Wesentlichen nur schmale Hohlräume die in einer Richtung eine kleine Ausdehnung haben, welche der Mächtigkeit des Kreissägeblattes entspricht mit dem die Nut gebildet wurde. Vorzugsweise liegt diese Mächtigkeit bei im Wesentlichen 4mm.

Zur Bereitstellung eines Leichtbauelements mit einer guten Wärmedämmung wird an einer Leichtbauplatte, insbesondere zwischen zwei miteinander verbundenen Leichtbauplatten, eine Lage mit Holzspänen angeordnet, wobei die Holzspäne beim Bearbeiten von trockenen Brettern bzw. Schichten für Leichtbauplatten anfallen.

Im einfachsten Fall werden die Holzspäne einfach in im Wesentlichen gegen aussen abgeschlossene Hohlräume von Leichtbauelementen eingefüllt. Um ein langsames schwerkraftbedingtes Absacken bzw. alterungsbedingtes Zerfallen der Späne zu verhindern, wird den Spänen ein Bindemittel zugegeben, das gleichmässig verteilt minimale Bindungen zwischen den Holzspänen gewährleistet. Die Zugabe des Bindemittels kann direkt beim Einfüllen der Holzspäne in Hohlräume erfolgen. Bei einer weiteren bevorzugten Ausführungsform werden mattenförmige Dämmelemente hergestellt, die an Leichtbauplatten befestigt werden. Bei der Herstellung der mattenförmigen Dämmelemente wird nach der Beigabe des Bindemittles ein Formprozess durchgeführt, welcher den Dämmelementen die gewünschte Form und Stabilität gibt.

Das bevorzugte Bindemittel ist jeweils an die Anwendung angepasst. Dabei spielt es eine Rolle, wie schnell eine minimale Stabilität erzielt werden muss und ob der Aushärtungsvorgang unterstützt werden kann. Bei Spänen, die in einen Hohlraum eingefüllt werden ist die Anforderung an den optimalen Binder anders als bei Spänen die zu Matten zusammengefügt werden. Zudem kann die Binderzusammensetzung auch auf Brandschutzanforderungen und/oder auf den Schutz gegen biologische Abbauprozesse ausgerichtet werden.

Ein vielfältig einsetzbares Bindemittel umfasst vorzugsweise einen Anteil eines organischen Binders und einen Anteil eines anorganischen Binders, wobei diese beiden Binder gegenseitig verträglich sein müssen.

Als organischer Binder wird vorzugsweise ein Polymerbinder, beispielsweise Polyvinylacetat (PVAc) in Form einer Lösung in einem organischen Lösemittel oder vorzugsweise als Dispersion eingesetzt. Polyvinylacetat ist ein amorpher, geruch- und geschmackloser Kunststoff mit hoher Licht- und Wetterbeständigkeit. Es ist zwar brennbar, jedoch nicht leicht entflammbar.

Als anorganische Binder eignen sich Binder auf der Basis von Alkali-Polysilikaten. Alkali-Polysilikate sind kristalline oder als Gemisch verschiedener Silicate glasartige (amorphe) Feststoffe bzw. in Wasser viskose Lösungen. Sie umfassen mindestens eines der Alkali-Metalle Lithium, Natrium, Kalium, Rubidium, Caesium oder Francium, wobei Alkali-Polysilikate mit Natrium und Kalium als Wasserglas am meisten verbreitet sind.

Aus dem Bereich der Farben sind abhängig von den verwendeten Bindern Silikatfarben und Dispersionssilikatfarben bekannt. Dispersionssilikatfarben enthalten neben Alkali-Polysilikaten bzw. Wasserglas noch ein organisches Bindemittel, üblicherweise eine Kunstharzdispersion. Aus diesem Grund werden Dispersionssilikatfarben auch als Organosilikatfarben bezeichnet. Nach DIN 18363 dürfen Dispersionssilikatfarben max. 5 Gewichtsprozent organische Bestandteile umfassen. Gängige Silikatfarben sind als Zweikomponentenprodukte aufgebaut und bestehen aus flüssigem Wasserglas (Binder) und einer pulverförmigen Pigmentfüllstoffmischung, wobei diese beiden Komponenten erst kurz vor der Verarbeitung zusammengerührt werden, weil die Pigmentpartikel bei längeren Standzeiten sedimentieren. Zum Erzielen von Bindungen zwischen den Holzspänen kann somit die Binderkomponente einer handelsüblichen Silikatfarbe verwendet werden.

DE 26 52 421 A1 beschreibt ein Bindemittel auf der Basis von Alkali-Polysilikaten, das aus einer Mischung von Natriumsilikat und/oder Kaliumsilikat mit Lithiumsilikat besteht. Bereits ein kleiner Anteil von Lithiumsilikat erhöht die Wasserfestigkeit im abgebundenen Zustand und gewährleistet einen etwas tieferen pH Wert. Zudem können die bei der Abbindung von Natriumwasserglas auftretenden Ausblühungen mit dem Anteil von Lithiumsilikat vermieden werden.

Bei gebrauchsfertigen Bindern auf der Basis von Alkali-Polysilikaten sind die Alkali-Polysilikate bereits in Wasser gelöst. Auch ein organischer Binder, insbesondere Polyvinylacetat (PVAc), kann als wässrige Dispersion eingesetzt werden. Um eine möglichst homogene Bindungsstruktur in einer Menge von Holzspänen gewährleisten zu können, muss der wässrige Binder möglichst gleichmässig mit möglichst vielen Holzspänen in Kontakt gebracht werden. Sowohl bei der Zugabe des Bindemittels direkt beim Einfüllen der Holzspäne in Hohlräume als auch bei der Herstellung der mattenförmigen Dämmelemente wird der wässrige Binder über Düsen in einen Materialfluss der Späne eingebracht.

Für die Herstellung des Dämmstoffes mit Holzspänen wird vorzugsweise ein Bindemittel mit Anteilen aus nachwachsenden Rohstoffen verwendet. Solche Bindemittel können Tannine, technische Lignine, Kohlenhydrate wie z.B. Stärke oder auch Proteine z.B. Kasein umfassen. In der Kombination mit Holzspänen sind die in der Natur weit verbreiteten Tannine, die sowohl in hydrolysierbarer als auch in kondensierter Form vorliegen, besonders vorteilhaft. Die Produktion ist überwiegend auf kondensierte Tannine ausgerichtet, die insbesondere aus Baumrinden hergestellt werden. Vorzugsweise werden Bindemittel mit Tannin und Additiven, beispielsweise mit Hexamin, verwendet, bei denen nur geringe Formaldehyd-Emissionen auftreten. Aufgrund ihrer chemischen Struktur lassen sich Tannine zu hochmolekularen Kondensationsprodukten mit hohen Härtungsgeschwindigkeiten umsetzen. Die Eigenschaften von Tanninharzen können durch den Zusatz von Isocyanaten verbessert werden.

Beim Herstellen der mattenförmigen Dämmelemente mit Holzspänen muss das Bindemittel in Kontaktbereichen zwischen locker zusammengeführten Holzspänen Bindungsbrücken ausbilden. Dazu wird das Bindemittel so ausgebildet und den Holzspänen zugeführt, dass die Holzspäne genügend mit Bindemittel benetzt werden und dass sich beim anschliessenden Abbinden Bindemittel-Brücken zwischen Holzspänen bilden und das entstehende Dämmmaterial luftdurchlässig ist. Zum Erzielen der gewünschten Benetzungseigenschaft wird dem Bindemittel gegebenenfalls ein Benetzungsmittel und/oder ein Schaumbildner und/oder ein Lösungsmittel, insbesondere Wasser, zugegeben. Um ein besonders schnelles Abbinden zu erzielen, wird gegebenenfalls ein Zweikomponenten-Binder eingesetzt.

Bei einer bevorzugten Ausführungsform werden sowohl die Späne als auch der wässrige Binder elektrostatisch geladen. Die beiden Komponenten werden je entgegen gesetzt geladen, so dass beim Zusammentreffen die Ladungen, bzw. der Ladungsausgleich, zu einer optimalen Verteilung des Binders über die Holzspäne führt.

Beim Befüllen eines Hohlraumes können die aufgeladenen Späne durch ein Rohr zugeführt werden, wobei dem Rohrende Düsen für das aufgeladene Bindemittel zugeordnet sind. Bei einer Herstellung mattenförmiger Dämmelemente wird mindestens ein Trägerband und eine Auftrageinrichtung zum schichtförmigen Auftragen der vorzugsweise geladenen Späne auf das Trägerband sowie auf einer Aushärtungsstrecke ein Pressband verwendet. Die Auftrageinrichtung umfasst zudem eine Düsenanordnung zum Eintragen des vorzugsweise geladenen Bindemittels. Mit einer oder mehreren weiteren Auftrageinrichtung können weitere Teilschichten auf die erste Schicht von mit Bindemittel durchsetzten Spänen aufgetragen werden. Die Schichtdicke der einzelnen Teilschichten kann so klein gewählt werden, dass die Benetzung mit dem Bindemittel in der entstehenden Gesamtschicht im Wesentlichen homogen ist. Beim Durchlaufen der Aushärtungsstrecke zwischen Trägerband und Pressband werden zwischen den Holzspänen Bindungsbrücken soweit ausgebildet, dass der entstehende mattenförmige Dämmstoff zusammenhält. Um das Aushärten zu beschleunigen wird vorzugsweise Wärme und gegebenenfalls Luft zugeführt.

Leichtbauelemente und Leichtbauplatten können dann einfach zusammengestellt werden, wenn sie Nut und/oder Federelemente umfassen. Ein Hauskörper umfasst Leichtbauelemente und Leichtbauplatten für Seitenwände, Zwischenwände, Böden bzw. Decken und gegebenenfalls Dachflächen. Beim Aufbauen des Hauskörpers werden aneinander anschliessende Leichtbauelemente und gegebenenfalls Leichtbauplatten mit ihren Seitenflanken aneinander gebunden. In einer vorteilhaften Ausführung umfassen miteinander verbundene Elemente bzw. Platten einander zugeordnete Nuten, in welche entsprechende Federn von Verbindungselementen eingreifen. Gegebenenfalls sind die Nuten einander zugewandt und weiten sich je gegen das Innere des Elementes bzw. der Platte auf, so dass ein an die beiden Nutquerschnitte angepasstes Verschlusselement gleichzeitig in beide Nuten einführbar ist, um die Elemente bzw. Platten zusammenzuhalten.

Anstelle von in die Nuten einführbaren Verschlusselementen mit fester Form umfassen bevorzugte Ausführungen eine Spanneinrichtung, die einander zugewandte Nuten von zu verbindenden Leichtbauelementen mit Kontaktflächen der Spanneinrichtung beim Spannen der Spanneinrichtung in eine gewünschte Kontaktlage bewegen. Die Nuten sind insbesondere an Nutteilen bzw. Rahmenteilen der Leichtbauelemente oder Leichtbauplatten ausgebildet. Vorzugsweise umfasst die Spanneinrichtung mindestens eine Anordnung mit je zwei Klemmelementen, die von mindestens einer Spannschraube oder gegebenenfalls einer Spannbetätigung aufeinander zu bewegt werden können, wobei Führungsflächen der Klemmelemente im Eingriff mit passenden Nutflächen in einem spitzen Winkel zur Schraubenachse, bzw. zur Spannrichtung, verlaufen und bei der Bewegung der Klemmelemente aufeinander zu durch die auf die Nutflächen wirkenden Kräfte die zu verbindenden Leichtbauelemente bzw. Leichtbauplatten in die gewünschte Kontaktlage bewegen. Nutteile und die Klemmelemente erstrecken sich vorzugsweise über die gesamte Ausdehnung der Seitenflanken der Leichtbauelemente.

Die Schraubenachsen, bzw. die Spannrichtungen, stehen bei gleich ausgerichteten Leichtbauelementen im Wesentlichen senkrecht zu den grossen Randflächen der Leichtbauelemente, so dass die Spannschrauben bzw. Spannbetätigungen von einer Seite der Leichtbauelemente her bedient werden können. Es versteht sich von selbst, dass solche Spannverbindungen auch zwischen unterschiedlich ausgerichteten Leichtbauelementen, beispielsweise als Eckverbindungen, zwischen Leichtbauelementen und anderen Bauteilen, beispielsweise Decken bzw. Böden , angeordnet werden können.

Wenn die gespannte Verbindung mit einem Klebemittel fixiert wird, können nach dem Aushärten des Klebemittels die Spannschrauben bzw. die Spannbetätigungen entfernt werden und es entsteht eine Verbindung, die frei von metallischen Teilen ist. Die erfinderischen Leichtbauelemente ermöglichen es die Wände, Decken und Böden von Häusern vollständig metallfrei aufzubauen, so dass der Rohbau lediglich aus Holz, Klebemittel, Holzspänen und gegebenenfalls Bindemittel zum Verbinden der Späne besteht.

Nach dem Festspannen kann die Spanneinrichtung mit Abdeckleisten abgedeckt werden, welche zwischen die grossen Randflächen der verbundenen Leichtbauelemente eingeführt werden. Gegebenenfalls wird zwischen einer Spanneinrichtung und der zugeordneten Abdeckleiste Dämmstoff, insbesondere ein Dämmstreifen, angeordnet.

Es versteht sich von selbst, dass alle aus dem Stande der Technik bekannten Verbindungsmittel eingesetzt werden können, insbesondere auch Spannbänder, welche bei Erdbebenereignissen eine gewisse Nachgiebigkeit und gegenseitige Verschiebbarkeit der Wandelemente gewährleisten. Wenn die Leichtbauelemente nicht verleimt werden, so ist ein Abbau ohne Zerstörung von Leichtbauelementen möglich.

Ein ganz wesentlicher Vorteil der vorliegenden Erfindung besteht darin, dass alle für die Erstellung der Leichtbauelemente notwendigen Hilfsmittel, wie Maschinen und die durchzuführenden Arbeitsschritte so einfach sind, dass sie von bloss kurz angelernten Arbeitskräften durchgeführt werden können und der maschinelle Aufwand auf ein Minimum reduziert ist. Die Produktion der Leichtbauelemente kann in der Nähe des Ortes mit den zu erstellenden Hauskörpern erfolgen.

Anhand der Zeichnung wird die Erfindung näher erläutert.

Dabei zeigen

Fig. 1, 2, 2a    Schnitte durch miteinander verbundene Leichtbauelemente,

Fig. 3 und 4    schematische Darstellungen zur Herstellung von Nuten,

Fig. 5 und 6    stirnseitige Ansichten von Brettern die analog zu Fig. 3, 4 bearbeitet wurden,

Fig. 7    eine stirnseitige Ansicht eines Brettes mit unterschiedlich tiefen Nuten,

Fig. 8    eine perspektivische Darstellung von Schichten einer Leichtbauplatte,

Fig. 9    eine perspektivische Darstellung eines Hauskörpers mit Leichtbauelementen,

Fig. 10 und 11    Ansichten von Abschnitten von Leichtbauplatten,

Fig. 12    eine schematische Darstellung zum Einfüllen von Dämmstoff in einen Hohlraum eines Leichtbauelementes,

Fig. 13    eine schematische Darstellung zur Herstellung von mattenförmigem Dämmstoff,

Fig. 14 bis 16    Visualisierungen unterschiedlicher Holzspanverteilungen,

Fig. 17    Visualisierung eines Ausschnitts eines mattenförmigen Dämmstoffs und

Fig. 18    Schnitt durch miteinander verbundene Leichtbauplatten, die als Innenwände eingesetzt werden können.

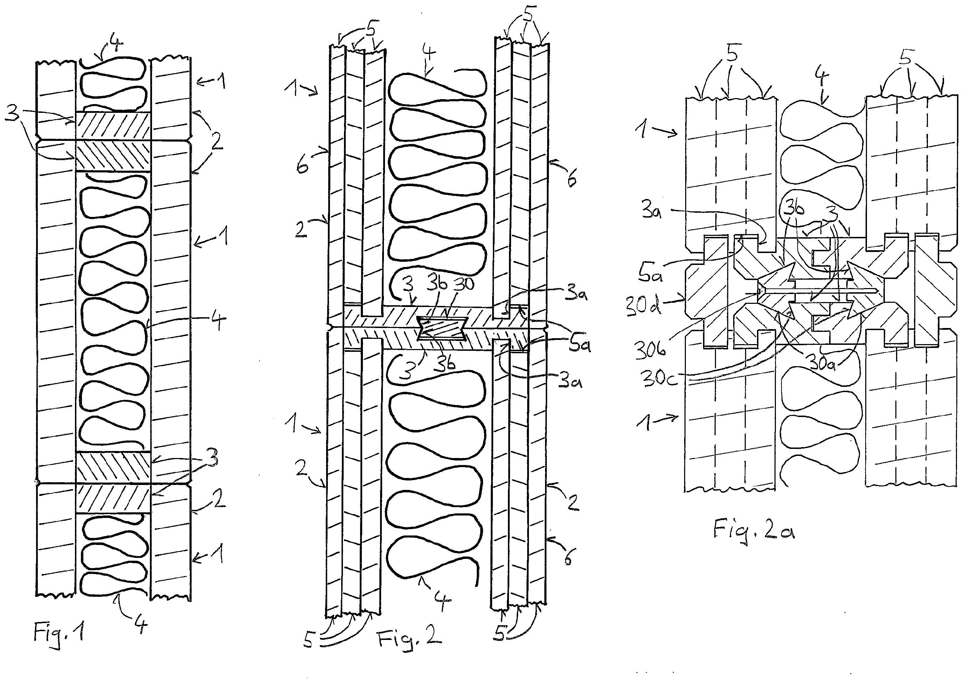

Die Fig. 1 zeigt einen Ausschnitt aus drei stirnseitig miteinander verbundenen Leichtbauelementen 1, die bei beiden seitlichen Aussenflächen je eine Leichtbauplatte 2 umfassen. Stirnseitig angeordnete Rahmenteile 3 halten die beiden Leichtbauplatten 2 jedes Leichtbauelementes 1 in einem vorgegebenen Abstand zueinander, so dass im Innern des Leichtbauelementes 1 ein Hohlraum ausgebildet ist. In der dargestellten Ausführungsform ist der Hohlraum mit Dämmstoff 4 gefüllt. Dieser Dämmstoff 4 kann entweder in der Form von Holzspänen, vorzugsweise mit Bindemittel, eingefüllt werden, oder als Dämmstoffmatte beim Zusammenstellen des Leichtbauelementes 1 eingelegt werden. Die Leichtbauplatten 2 sind aus Brettern gebildet, welche bei zumindest einer ihrer Hauptflächen eine nicht eingezeichnete Schar parallel verlaufender Nuten aufweisen.

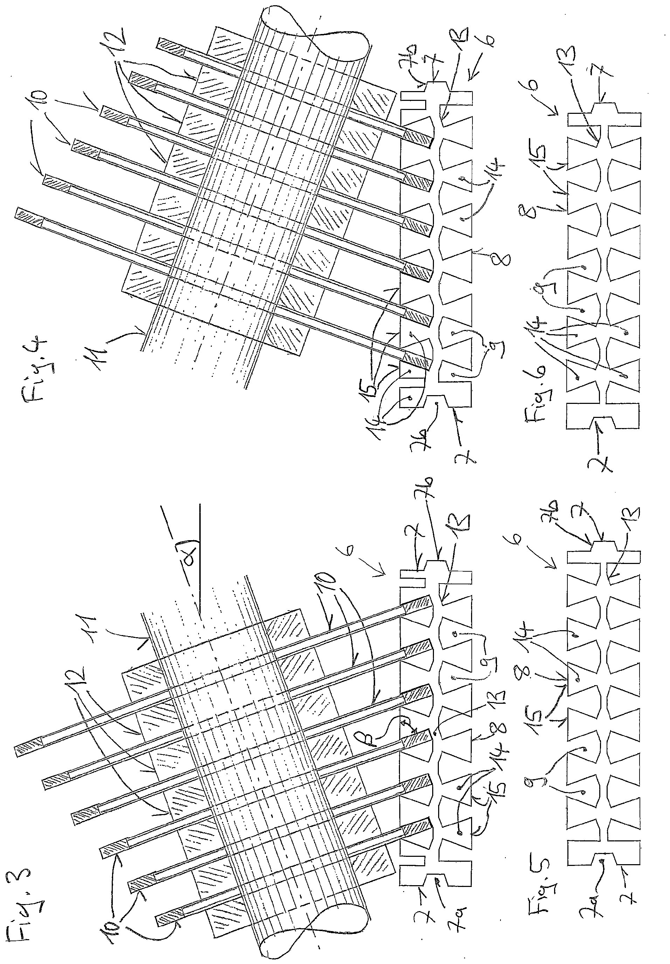

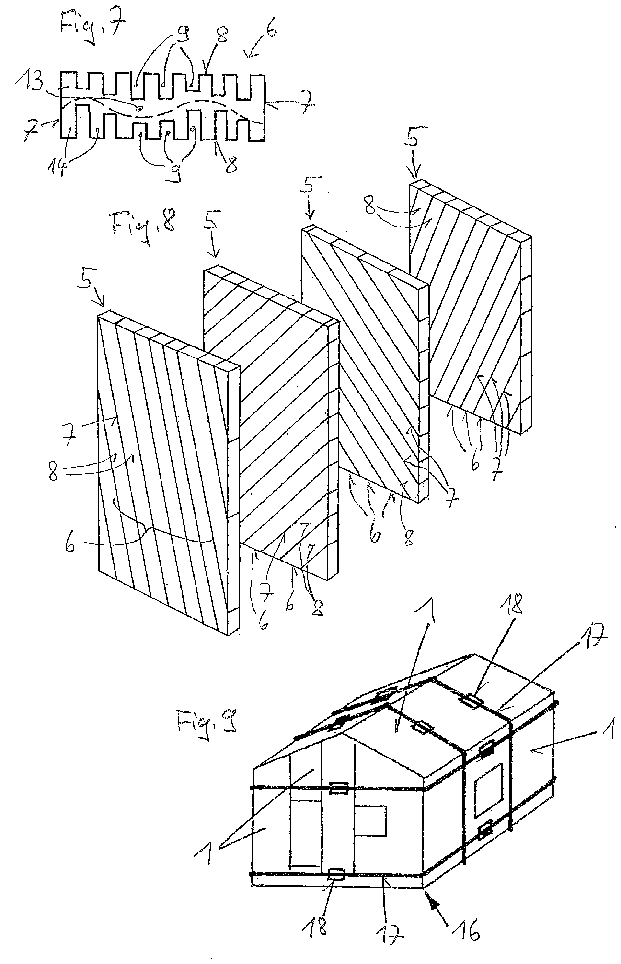

Fig. 2 zeigt eine Ausführung analog zur Ausführung in Fig. 1, wobei die Leichtbauplatten 2 je drei (in Fig. 8 vier) Schichten 5 umfassen. Jede Schicht 5 ist aus Brettern 6 gebildet (vgl. Fig. 3 bis 7). Die Bretter 6 jeder Schicht 5 sind bei ihren Seitenflanken 7 mit Klebverbindungen verbunden und weisen dort vorzugsweise Nuten 7a und Federn 7b auf (vgl. Fig. 3,5,8). Die direkt aneinander anschliessenden Schichten 5 sind bei den Hauptflächen 8 ihrer Bretter 6 über Klebverbindungen verbunden. Die stirnseitig angeordneten Rahmenteile 3 greifen mit ersten Nut-Federanordnungen 3a in zweite Nut-Federanordnungen 5a der Leichtbauplatten 2 ein, wobei diese ineinandergreifenden Nut-Federanordnungen 3a, 5a miteinander verleimt sind. Damit die Leichtbauelemente 1 auf einer Baustelle stirnseitig einfach miteinander verbunden werden können, weisen die Rahmenteile 3 nach innen erweiterte Verbindungsnuten 3b auf, so dass in der Mitte verjüngte Leisten 30 nach dem Einschieben in die Verbindungsnuten 3b die Leichtbauelemente 1 zusammenhalten.

Die Bretter 6 weisen zumindest bei einer ihrer Hauptflächen 8 eine Schar parallel verlaufender Nuten 9 auf (vgl. Fig. 3 bis 7). Bei einer bevorzugten Ausführungsform verlaufen die Nuten 9 parallel zur Brettlängsrichtung bzw. zu den Seitenflanken 7. Die einander zugewandten Nuten 9 miteinander verbundener Schichten verlaufen unter einem Winkel zueinander. In der Ausführungsform gemäss Fig. 8 verlaufen die Brettlängsrichtungen in direkt aneinander anschliessenden Schichten 5 unter einem spitzen Winkel zueinander. Bei Brettern 6 mit Nuten 9 in Brettlängsrichtung verlaufen somit auch die Nuten 9 in direkt aneinander anschliessenden Schichten 5 unter einem spitzen Winkel zueinander.

Fig. 2a zeigt eine vorteilhafte Spannverbindung, bei der an den beiden zu verbindenden Leichtbauelementen 1 Rahmenteile 3 mit ersten Nut-Federanordnungen 3a in zweite Nut-Federanordnungen 5a der Leichtbauplatten 2 eingreifen, wobei diese ineinandergreifenden Nut-Federanordnungen 3a, 5a miteinander verleimt sind. Damit die Leichtbauelemente 1 auch auf einer Baustelle einfach miteinander verbunden werden können, weisen die Rahmenteile 3 Verbindungsnuten 3b auf. Eine Spanneinrichtung 30a, 30b, 30c ermöglicht es, die einander zugewandte Nuten von zu verbindenden Leichtbauelementen mit Kontaktflächen 30c der Spanneinrichtung beim Spannen in eine gewünschte Kontaktlage zu bewegen.

In der dargestellten Ausführungsform umfasst jedes Leichtbauelement 1 zwei Nuten 3b, die an zwei miteinander verbundenen Nutteilen 3 bezüglich einer zentralen Ebene der Leichtbauelemente 1 spiegelbildlich ausgebildet sind. Vorzugsweise umfasst die Spanneinrichtung mindestens eine Anordnung mit zwei spiegelbildlich geformten Klemmelementen 30a, die von mindestens einer Spannschraube 30b aufeinander zu bewegt werden können, wobei Führungsflächen 30c der Klemmelemente 30a im Eingriff mit passenden Nutflächen in einem spitzen Winkel zur Schraubenachse verlaufen und so ausgerichtet sind, dass bei der Bewegung der Klemmelemente 30a aufeinander zu durch die auf die Nutflächen wirkenden Kräfte die zu verbindenden Leichtbauelemente 1 in die gewünschte Kontaktlage bewegt werden.

Die Achsen der Spannschrauben 30b stehen quer, insbesondere im Wesentlichen senkrecht, zu den grossen Randflächen zumindest eines der beiden Leichtbauelemente 1 und können von einer Seite des Leichtbauelementes 1 her bedient werden. Wenn die gespannte Verbindung mit einem Klebemittel fixiert wird, können nach dem Aushärten des Klebemittels die Spannschrauben entfernt werden und es entsteht eine Verbindung, die frei von metallischen Teilen ist. Wenn die gewünschte Verbindung fest ausgebildet ist, kann die Spanneinrichtung gegebenenfalls mit nicht eingezeichnetem Dämmstoff, insbesondere mit einem Dämmstreifen, versehen und mit Abdeckleisten 30d abgedeckt werden. Die Abdeckleisten werden zwischen die grossen Randflächen der verbundenen Leichtbauelemente 1 eingeführt.

Fig. 3 und 4 zeigen schematisch das Abtragen von Holzspänen von Brettern 6. Dazu werden beispielsweise 6 Kreissägeblätter 10 an einer gemeinsamen Welle 11 mit Distanzhaltern 12 in regelmässigen Abständen angeordnet. Bei drehenden Kreissägenblätter 10 werden die Bretter 6 in ihrer Längsrichtung unter der Welle 11 durchbewegt, wobei die Kreissägeblätter mit ihrem äusseren Rand entsprechend der gewünschten Nuttiefe in die Bretter 6 eingreifen.

In einem ersten nicht dargestellten Bearbeitungsbereich sind gleich grosse Kreissägeblätter an einer Welle angeordnet, die parallel zur Hauptfläche 8 der Bretter 6 und senkrecht zur Brettlängsrichtung ausgerichtet ist. Mit diesen Kreissägeblättern wird der zentrale Bereich der Nuten 9 ausgebildet. Wenn die Nuten bei beiden Hauptflächen 8 der Bretter 6 ausgebildet werden, so wird über und unter den Brettern eine Welle mit gleich grossen Kreissägeblättern eingesetzt.

In einem zweiten Bearbeitungsbereich wird gemäss Fig. 3 eine zur zu bearbeitenden Hauptfläche 8 der Bretter 6 in einem ersten spitzen Wellen-Winkel $\alpha$ ausgerichtete Welle 11 verwendet, auf der in vorgegebenen Abständen Kreissägeblätter 10 mit zunehmendem Druchmesser angeordnet sind. Die Welle 11 liegt in einer Ebene, welche senkrecht auf der Hauptfläche 8 der Bretter 6 steht und senkrecht zu den Längsachsen der Nuten 9 ausgerichtet ist. Der Winkel zwischen der Welle 11 und der Hauptfläche 8 sowie die Durchmesser der Kreissägeblätter 10 und ihre Positionen auf der Welle 11 werden so aufeinander abgestimmt, dass alle Kreissägeblätter im Wesentlichen gleich tiefe Nuten ausbilden. Aufgrund der schiefgestellten Welle 11 ist zwischen den Ebenen der Kreissägeblätter 10 und der Hauptfläche 8 ein Scheiben-Winkel $\beta$ = 90° - $\alpha$ ausgebildet.

Entsprechend der Neigung der Kreissägeblätter bzw. des Scheiben-Winkels $\beta$ ist auch zwischen den seitlichen Randflächen der entstehenden Nuten 9 und der Hauptfläche 8 des Brettes 6 der Scheiben-Winkel $\beta$ ausgebildet. Damit die Nuten 9 in Schnittebenen senkrecht zur Nutlängsrichtung nicht die asymmetrisch Form beibehalten, wird gemäss Fig. 4 der gleichen Hauptfläche 8 eine weitere Welle 11 mit Kreissägeblättern 10 zugeordnet, welche unter einem weiteren spitzen Wellen-Winkel zur Hauptfläche 8 der Bretter 6 ausgerichtet ist. Diese weitere Welle 11 ist bezügliche einer senkrecht auf der Hauptfläche 8 stehenden die zentrale Längsachse des Brettes 6 umfassende Spiegelebene gespiegelt zur Welle 11 der Fig. 3 ausgerichtet und zusätzlich in Brettlängsrichtung etwas versetzt zur ersten Welle angeordnet.

Die Bearbeitung mit den geneigten Wellen 11 und den daran befestigten verschieden grossen Kreissägeblättern 10 erfolgt vorzugsweise an beiden Hauptflächen 8 der Bretter 6 also von oben und von unten.

Die eingesetzten Wellen 11 mit den Kreissägeblättern 10 sind so aufeinander abgestimmt, dass nach der Bearbeitung einer Hauptfläche 8 mit allen Wellen 11 im Wesentlichen symmetrische Nutquerschnitte vorliegen, wobei die Nutbreite von der Hauptfläche 8 weg gegen das Innere des Brettes 6 hin grösser wird. Die Nutöffnung bei der Hauptfläche 8 entspricht mindestens der Ausdehnung der Kreissägeblätter 10 in der Hauptfläche 8 senkrecht zur Nutlängsrichtung. Zwischen den Nuten 9 bleiben Stege 14 aus Holz stehen, welche vom Innern des Bretts 6 gegen die Hauptfläche 8 breiter werden und bei der Hauptfläche 8 eine breite Stegfläche 15 aufweisen. Diese breiten Stegflächen 15 gewährleisten beim Verkleben von zwei Schichten 5 genügend grosse Kontaktflächen für eine stabile Klebeverbindung und dies auch unabhängig vom Winkel zwischen den Nuten 9 in den aneinander anliegenden Hauptflächen 8 der beiden Schichten 5.

Eine zentrale zusammenhängende Holzschicht 13 kann Kräfte aufnehmen, welche über die Seitenflanken 7 ins genutete Brett 6 eingetragen werden. Nach der Verleimung von Schichten mit verschieden ausgerichteten Nuten, werden diese Querkräfte von den Stegen 14 der angrenzenden Schicht 5 aufgenommen, weil diese Stege 14 quer zu den Seitenflanken 7 der Bretter 6 der ersten Schicht 5 verlaufen.

Die Bretter 6 der Fig. 5 und 6 sind direkt unter den Brettern der Fig. 3 und 4 angeordnet, damit erkennbar ist, dass die Lage der Stege 14 relativ zu den Seitenflanken 7 durch die seitliche Positionierung der Bretter 6 relativ zu den Kreissägeblättern 10 einstellbar ist. Die Anordnung der Stege 14 wird gemäss Fig. 5 und 6 so gewählt, dass im Brettquerschnitt die von der zentralen zusammenhängenden Holzschicht 13 beidseitig wegführenden Stege 14 zu einer Mittelebene im Wesentlichen gespiegelt ausgebildet sind. So können Druckkräfte, die über die breiten Stegflächen 15 von den Stegen 14 bei der ersten Hauptfläche 8 aufgenommen werden, in der Mitte des Brettes 6 direkt an die Stege 14 übertragen werden, die sich gegen die zweite Hauptfläche 8 erstrecken. Diese auf hohe Druckbelastungen der Hauptflächen 8 ausgelegten Ausführung eignet sich beispielsweise für Leichtbauelemente, die für Böden bzw. Decken eingesetzt werden.

Gemäss Fig. 3 und 4 sind die Stege 14 bei beiden Hauptflächen 8 gegeneinander verschoben, so dass den Stegen 14 bei der ersten Hauptfläche 8 Nuten 9 bei der zweiten Hauptfläche 8 zugeordnet sind. Damit Druckkräfte in einer gewünschten Weise von einer Hauptfläche 8 zur anderen übertragen werden können, ist der zentrale Holzbereich 13 so ausgebildet, dass sich die Kräfte von einem Steg 14 der ersten Hauptfläche 8 möglichst optimal auf zwei benachbarte Stege 14 der zweiten Hauptfläche 8 aufteilen bzw. übertragen. Für Gebäudewände in erdbebengefährdeten Gebieten ist es vorteilhaft, wenn hohe Verformungsenergien nicht zum vollständigen Brechen der Leichtbauplatte 2 führen, sondern in den Platten 2 grosse Verformungen erzeugen, insbesondere mit lokalen Materialbrüchen bei der zentralen zusammenhängenden Holzschicht 13.

Fig. 7 zeigt ein Brett 6, dessen Nuten 9 mit unterschiedlich grossen Kreissägeblättern ausgearbeitet wurden, wobei die Kreissägeblätter an zwei zu den Brett-Hauptflächen parallelen Wellen unter und über dem Brett angeordnet sind. Damit eine zentrale zusammenhängende Holzschicht 13 im Wesentlichen eine konstante Mächtigkeit aufweist, sind die Durchmesser der einander zugeordneten Kreissägeblätter unter bzw. über dem Brett 6 aufeinander abgestimmt.

Die Fig. 9 zeigt schematisch die Verwendung von Leichtbauelementen 1 zum Aufbauen eines Hauses 16. In der dargestellten Ausführungsform sind zur Verspannung des Hauses 16 Spannbänder 17 dargestellt, die von Spannvorrichtungen 18 mit der gewünschten Spannkraft beaufschlagt werden können. Es versteht sich von selbst, dass die Spannbänder 17 auch aus Bandabschnitten zusammengesetzt sein können, wobei die Bandabschnitte in den Leichtbauelementen 1 angeordnet sind und beim Aufbauen des Hauses 16 über Verbindungseinrichtungen verbunden und gegebenenfalls gespannt werden können, so dass an der Aussenseite des Hauses 16 im Wesentlichen nichts von den Spannbänder 17 und den Verbindungseinrichtungen in Erscheinung tritt.

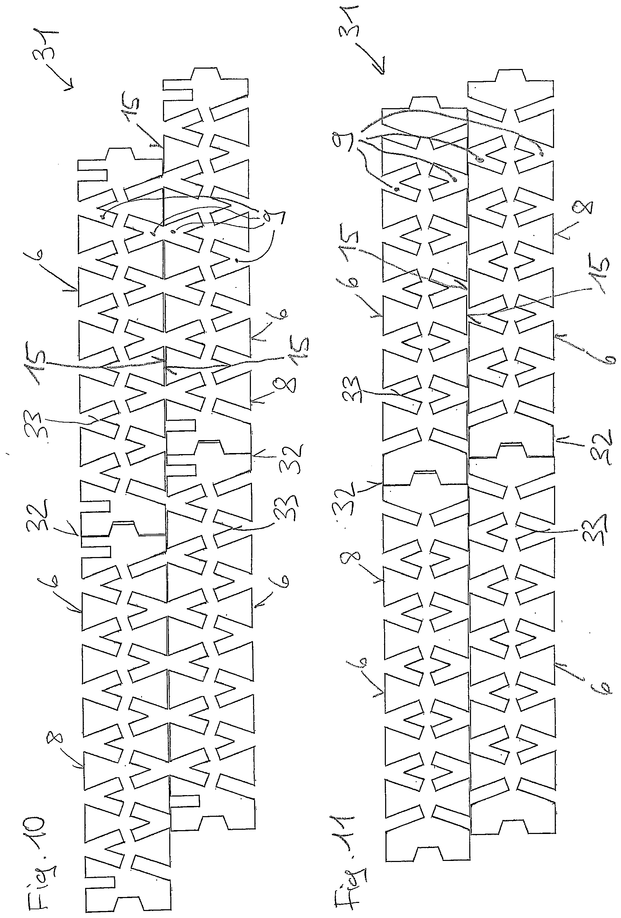

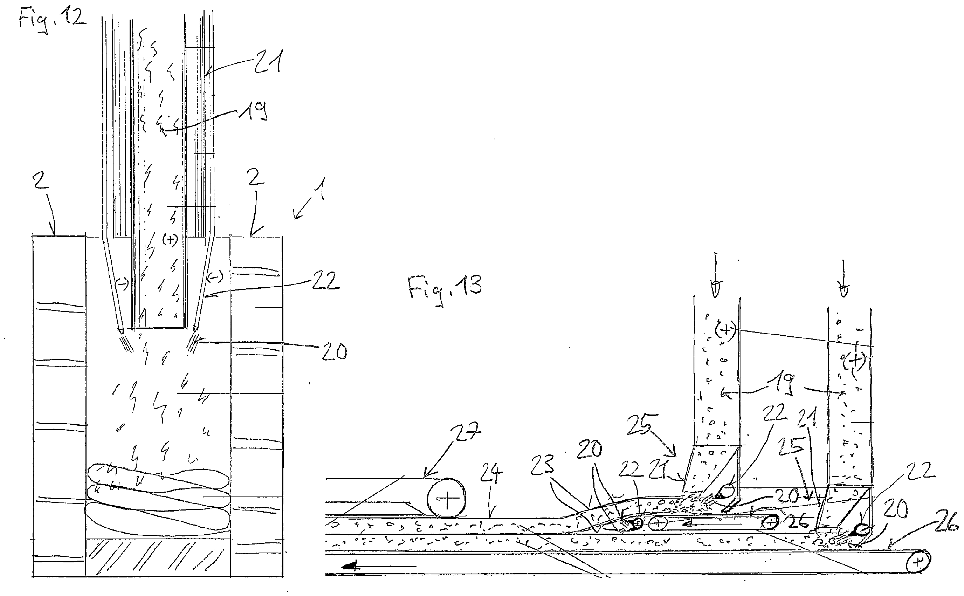

Fig. 10 und 11 zeigen je einen Abschnitt 31 aus einer Leichtbauplatte, bei der die Hauptflächen 8 der Bretter 6 parallel zur Aussenfläche der Leichtbauplatte verlaufen und die Bretter 6 beider bzw. aller Schichten parallel ausgerichtet sind. Die Abschnitte 31 erstrecken sich senkrecht zur Zeichnungsebene nur über eine kurze Länge. Nach dem Abtrennen einer Vielzahl von Abschnitten 31 mit gleichen Längen werden diese um 90° umgelegt und in einer Schicht mit den von den Abschnitten der Hauptflächen 8 gebildeten langen Seitenflanken 32 direkt aneinander anschliessend angeordnet. Die Abschnitte 31 der Fig. 10 und 12 würden also in der dargestellten Lage aneinander geschoben und mit den Teilflächen der Aussenflächen der aufgeteilten Leichtbauplatten bzw. den Abschnitten der Hauptflächen 8 über eine Klebeverbindung in gegenseitige Verbindung gebracht. Eine Vielzahl solcher Abschnitte 31 bilden zusammen eine Schicht, wobei die Schnittflächen der zusammengefügten Abschnitte 31 die Aussenflächen dieser Schicht bilden. Wenn die Struktur dieser Schicht nicht sichtbar sein soll, werden an beiden Aussenflächen der Schicht und an deren Seitenflanken bzw. Stirnseiten Deck-

Die in Fig. 10 und 11 dargestellten Abschnitte wurden von Leichtbauplatten abgetrennt bei denen die Nutbreiten von der Hauptfläche 8 weg gegen das Innere der Bretter 6 hin grösser wird, wobei am Nutgrund in die Nuten vorstehende Grate 33 aus Holz stehen gelassen wurden. Das heisst, dass beim Ausbilden dieser Nuten nur in zwei verschiedenen Richtungen schräg gestellte Kreissägeblätter eingesetzt wurden und auf den Einsatz der senkrecht zur Hauptfläche der Bretter ausgerichteten Kreissägeblätter verzichtet wurde. Entsprechend gibt es im tieferen Bereich der Nuten im Wesentlichen nur schmale Hohlräume die in einer Richtung eine kleine Ausdehnung haben, welche der Mächtigkeit des Kreissägeblattes entspricht mit dem die Nut gebildet wurde. Vorzugsweise liegt diese Mächtigkeit bei im Wesentlichen 4mm.

In der Ausführungsform gemäss Fig. 10 sind Leichtbauplatten verwendet worden deren Bretter bis auf die stehen gelassenen Grate 33 den Fig. 3 und 4 entsprechen und bei der Ausführungsform gemäss Fig. 11 entsprechen die Bretter bis auf die Grate 33 den Fig. 5 und 6. Ein weiterer Unterschied der Ausführungsformen der Fig. 10 und 11 besteht darin, dass in Fig. 10 die Stegflächen 15 der bei den Hauptflächen 8 miteinander verbundenen Bretter 6 im Wesentlichen genau aufeinander treffen und in Fig. 11 die Stegflächen 15 die Zugangsöffnungen zu den Nuten 9 der anliegenden Bretter 6 überspannen.

Fig. 12 zeigt einen Schritt eines Verfahrens bei dem Holzspäne 19 und Binder 20 als Dämmstoff in einen Hohlraum eines Leichtbauelementes 1 eingetragen werden. Das Leichtbauelement 1 umfasst zwischen zwei Leichtbauplatten 2 einen Hohlraum, der vorzugswiese oben über mindestens eine Zugangsöffnung zugänglich ist und zumindest seitlich und unten im Wesentlichen abgeschlossen ist. Die Holzspäne 19 werden durch ein Rohr 21 zugeführt und das Bindemittel 20 durch mindestens eine Leitung 22 mit einer düsenförmigen Austrittsöffnung. Die Austrittsöffnungen des Rohres 21 und der mindestens einen Leitung 22 sind einander so zugeordnet, dass alle austretenden Holzspäne möglichst gleichmässig mit Bindemittel beaufschlagt werden können. In der dargestellten Ausführungsform werden die Holzspäne und das Bindemittel je entgegengesetzt elektrisch aufgeladen, damit eine schnelle und möglichst vollständige Beaufschlagung bzw. Durchmischung gewährleistet ist.

Fig. 13 zeigt einen Schritt eines Verfahrens bei dem Holzspäne 19 und Binder 20 zu Dämmstoff-Matten zusammengefügt werden. In der dargestellten Ausführungsform werden zwei Teilschichten 23 zu einer Gesamtschicht 24 zusammengestellt. Es versteht sich von selbst, dass die Gesamtschicht aus einer beliebigen Anzahl von Teilschichten 23 aufgebaut werden kann, wobei für jede Teilschicht 23 eine Auftrageinrichtung 25 eingesetzt wird. Jede Auftrageinrichtung 25 trägt Holzspäne 19 schichtförmig auf ein Trägerband 26 auf. Die über Rohre 21 zugeführten Holzspäne 19 werden über düsenförmige Austrittsöffnungen von Leitungen 22 mit einem Bindemittel beaufschlagt. Obere Teilschichten 23 werden auf die jeweils darunterliegende aufgelegt. Die entstehende Gesamtschicht 24 wird zwischen dem untersten Trägerband 26 und einem Pressband 27 durch eine Aushärtungsstrecke geführt, wobei das Pressband 27 die mit dem Bindemittel versehenen Holzspäne gegen das Trägerband 26 presst. Zum Abtrennen von Abschnitten der Gesamtschicht 24 aus Dämmstoff wird entweder eine Trenneinrichtung eingesetzt, oder das Trägerband 26 und/oder das Pressband 27 weist Trennelemente auf. Bei der dargestellten Ausführungsform sind die Holzspäne und das Bindemittel beim Auftragen bzw. Beaufschlagen je entgegengesetzt elektrisch aufgeladen, damit eine schnelle und möglichst vollständige Durchmischung gewährleistet ist.

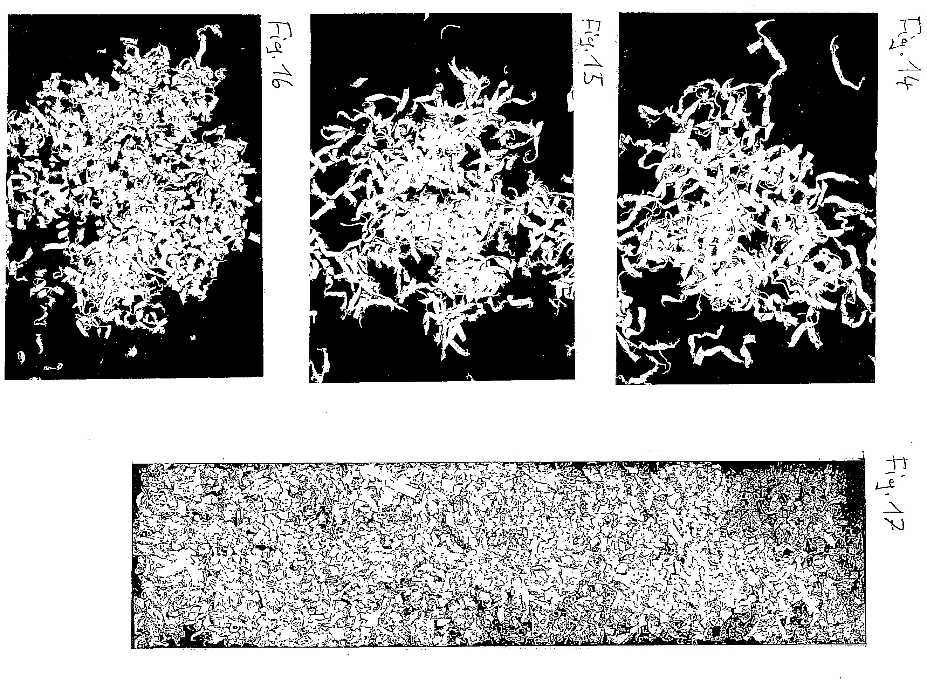

Die Figuren 14, 15 und 16 zeigen Holzspäne die mit Kreissägeblättern mit unterschiedlichem Durchmesser hergestellt wurden, wobei der Durchmesser des Kreissägeblattes bei den Spänen der Fig. 14 160mm bei Fig. 15 140mm und bei Fig. 16 120mm betrug. Die längsten Späne der Fig. 14 haben eine Länge von knapp 30mm, bei Fig. 15 knapp 22mm und bei Fig. 16 knapp 15mm. Es ist klar erkennbar, dass sich das Maximum der Verteilung der Spanlängen von Fig. 14 über Fig. 15 zu Fig. 16 schrittweise zu kleineren Spanlängen hin verschiebt. Wenn alle Nuten eines Brettes mit verschieden grossen Kreissägeblättern hergestellt werden, so ergibt sich aus allen Nuten zusammen ein Spänegemisch dessen Spanlängenverteilung breiter ist als bei der Herstellung von Spänen mit alles gleichen Kreissägeblättern. Ein Spangemisch mit Spanlängen die über einen gewünschten Längenbereich verteilt sind, kann eine komplexere Hohlraumstruktur gewährleisten, als Späne die alle im Wesentlichen die gleiche Länge aufweisen.

Fig. 17 zeigt einen Ausschnitt eines mattenförmigen Dämmstoffs der Holzspäne umfasst die mit Kreissägeblättern mit unterschiedlichen Durchmessern hergestellt wurden. Im Dämmstoff ist eine komplexe Hohlraumstruktur ausgebildet, aus der Feuchtigkeit schnell austreten kann. Wenn der erfinderische Dämmstoff in Leichtbauelementen von Häusern eingesetzt wird, bilden sich keine konstant feuchten Bereiche und entsprechend können biologische Abbauprozesse im Wesentlichen minimiert werden.

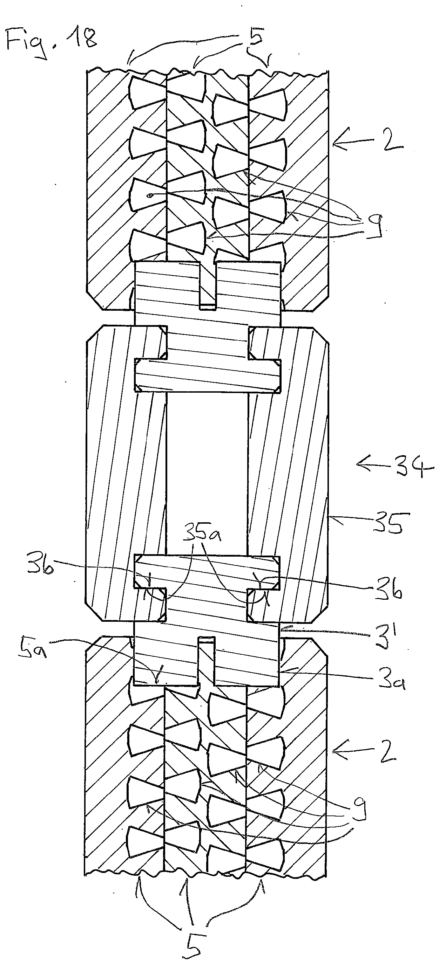

Nebst den aus Leichtbauelementen 1 mit Dämmstoff aufgebauten Wänden gemäss Fig. 1, 2 und 2 können auch Wände mit Leichtbauplatten 2 aufgebaut werden. Wände mit Dämmstoff eignen sich besonders als Aussenwände. Gebäude-Innenwände, die keine Dämmstoffschicht benötigen, können mit Leichtbauplatten 2 aufgebaut werden. Fig. 18 zeigt eine Innenwand die miteinander verbundene Leichtbauplatten 2 umfasst, wobei die Leichtbauplatten 2 vorzugsweise mindestens drei Schichten 5 umfassen. Nuten 9 sind in mindestens einer mittlere Schicht 5 auf beiden Seiten und in den beiden äusseren Schichten 5 nur auf der der mindestens einen mittleren Schicht 5 zugewandten Seite ausgebildet.

Die dargestellte Verbindungsvorrichtung 34 umfasst bei beiden zu verbindenden Leichtbauplatten 2 Rahmenteile 3', die mit ersten Nut-Federanordnungen 3a in zweite Nut-Federanordnungen 5a der Leichtbauplatten 2 eingreifen, wobei diese ineinandergreifenden Nut-Federanordnungen 3a, 5a miteinander verleimt sind. Damit die Leichtbauplatten 5 auch auf einer Baustelle einfach miteinander verbunden werden können, weisen die Rahmenteile 3 Verbindungsnuten 3b auf. Verbindungsleisten 35 mit Nut-Federanordnungen 35a ermöglichen es, die einander zugewandten Rahmenteile 3 der Leichtbauplatten 2 unter Verwendung von Klebemittel und/oder Verbindungselementen fest miteinander zu verbinden. Zwischen den von beiden Seiten eingesetzten Verbindungsleisten 35 entsteht gegebenenfalls ein Hohlraum, der für das Durchführen von Leitungen ausgelegt werden kann.

Es versteht sich von selbst, dass solche Innenwände einseitig oder auch beidseitig beplankt oder beschichtet werden können. Gegebenenfalls wird eine Beplankung von Abstandhaltern in einem gewünschten Abstand zu den Leichtbauplatten gehalten, so dass sich zwischen den Leichtbauplatten und der Beplankung ein Hohlraum ergibt, der beispielsweise für Installationszwecke oder zum Aufnehmen von Schalldämm-Material genutzt werden kann.

**Patentansprüche**

1. Leichtbauplatte (2) mit Brettern (6) oder mit Abschnitten von Brettern (6), welche Bretter (6) bzw. Abschnitte bei zumindest einer ihrer Hauptflächen (8) eine Schar parallel verlaufender Nuten (9) aufweisen und in mindestens einer Schicht (5) angeordnet sowie miteinander verbunden sind, wobei die Nuten (9) in der Leichtbauplatte (2) Hohlräume bilden und sich die Nuten (9) und die zwischen den Nuten (9) ausgebildeten Stege (14) parallel zur Längsrichtung der Bretter (6) bzw. Abschnitte erstrecken, **dadurch gekennzeichnet, dass** bei zumindest einem Teil der Nuten (9) der Bretter (6) bzw. Abschnitte der mindestens einen Leichtbauplatte (2) die Nutbreite von der Hauptfläche (8) weg gegen das Innere des Brettes (6) bzw. Abschnittes hin grösser wird und entsprechend die zwischen diesen Nuten (9) ausgebildeten Stege (14) aus Holz vom Innern des Brettes (6) bzw. Abschnittes gegen die Hauptfläche (8) breiter werden sowie bei der Hauptfläche (8) eine breite Stegfläche (15) aufweisen.

2. Leichtbauplatte (2) nach Anspruch 1, **dadurch gekennzeichnet, dass** sie mindestens zwei Schichten (5) umfasst und jede Schicht (5) aus Brettern (6) mit Nuten (9) gebildet ist, wobei die Bretter (6) jeder Schicht (5) bei ihren Seitenflanken (7) sowie die direkt aneinander anschliessenden Schichten (5) bei den Hauptflächen (8) ihrer Bretter (6) über Klebverbindungen verbunden sind und einander zugewandte Nuten (9) verschiedener miteinander verbundenen Schichten (5) unter einen Winkel zueinander verlaufen.

3. Leichtbauplatte (2) nach Anspruch 1 oder 2, **dadurch gekennzeichnet, dass** bei zumindest einem Teil der Schichten (5) die Bretter (6) bei beiden Hauptflächen (8) je eine Schar parallel verlaufender Nuten (9) aufweisen und vorzugsweise zumindest bei einer Hauptfläche (8) eine zweite Schar paralleler Nuten (9) in einem spitzen Winkel zur ersten Schar dieser Hauptfläche (8) ausgebildet ist.

4. Leichtbauplatte (2) nach einem der Ansprüche 1 bis 3, **dadurch gekennzeichnet, dass** von Leichtbauplatten, bei denen die Hauptflächen der Bretter parallel zur Aussenfläche der Leichtbauplatte verlaufen, kurze Abschnitte gleicher Länge um 90° umgelegt, in einer Schicht nebeneinander angeordnet und jeweils mit den Teilflächen der Aussenflächen der aufgeteilten Leichtbauplatten in gegenseitige Verbindung gebracht sind, so dass sie eine Schicht aus Abschnitten bilden, wobei die Schnittflächen der zusammengefügten Abschnitte die Aussenflächen der Schicht aus den kurzen Abschnitten bilden.

5. Leichtbauplatte (2) nach Anspruch 4, **dadurch gekennzeichnet, dass** an mindestens einer dieser Aussenflächen eine Deckschicht angeordnet ist.

6. Leichtbauelement (1) umfassend eine Leichtbauplatte (2) nach einem der Ansprüche 1 bis 5, **dadurch gekennzeichnet, dass** das Leichtbauelement (1) auch mindestens eine Lage aus Dämmstoff (4) mit Holzspänen (19) umfasst.

7. Leichtbauelement (1) nach Anspruch 6, **dadurch gekennzeichnet, dass** die Holzspäne (19) des Dämmstoffs (4) im Wesentlichen streifenförmig sowie flach, gewellt, rollenförmig, federförmig oder spiralförmig ausgebildet sind und zumindest 80 Gewichtsprozent der Holzspäne (19) des Dämmstoffs (4) von Holzspänen (19) mit einer Länge im Bereich von 2mm bis 40mm gebildet werden.

8. Leichtbauelement (1) nach Anspruch 6 oder 7, **dadurch gekennzeichnet, dass** die Holzspäne (19) des Dämmstoffs (4) zusammen mit einem Bindemittel (20) eine im Wesentlichen zusammenhängende Struktur bilden, das Bindemittel (20) zumindest einen Anteil eines organischen Binders und/oder eines anorganischen Binders umfasst, wobei der Binder insbesondere Tannin umfasst, der organische Binder vorzugsweise ein Polymerbinder, insbesondere Polyvinylacetat (PVAc), und der anorganischer Binder vorzugsweise ein Binder auf der Basis von Alkali-Polysilikaten, insbesondere eine Mischung von Natriumsilikat und/oder Kaliumsilikat mit Lithiumsilikat ist.

9. Verfahren zum Herstellen eines Leichtbauelementes (1) mit mindestens einer Leichtbauplatte (2) und einer der Leichtbauplatte (2) zugeordneten Lage aus Dämmstoff (4), wobei die mindestens eine Leichtbauplatte (2) Bretter (6) umfasst, welche bei zumindest einer ihrer Hauptflächen (8) eine Schar parallel verlaufender Nuten (9) aufweisen und in mindestens einer Schicht (5) angeordnet sowie über Klebverbindungen miteinander verbunden sind, **dadurch gekennzeichnet, dass** zum Bereitstellen der Bretter (6) mit Nuten (9), die zu mindestens einer Schicht (5) der Leichtbauplatte (2) zusammengefügt werden, von Ausgangsbrettern Holzspäne (19) abgetragen und zumindest teilweise zur Herstellung der Lage aus Dämmstoff (4) verwendet werden, wobei bei zumindest einem Teil der Nuten (9) der Bretter (6) der mindestens einen Leichtbauplatte (2) die Nutbreite von der Hauptfläche (8) weg gegen das Innere des Brettes (6) hin grösser ausgebildet wird und entsprechend die zwischen diesen Nuten (6) ausgebildeten Stege (14) aus Holz vom Innern des Bretts (6) gegen die Hauptfläche (8) breiter werden sowie bei der Hauptfläche (8) eine breite Stegfläche (15) aufweisen.

10. Verfahren nach Anspruch 9, **dadurch gekennzeichnet, dass** am Leichtbauelement (1) zwischen der mindestens einen Leichtbauplatte (2) und mindestens einer weiteren Platte mindestens ein Hohlraum ausgebildet wird, in welchen zur Herstellung der Lage aus Dämmstoff (4) die Holzspäne (19) vorzugsweise zusammen mit einem Bindemittel (20) eingefüllt werden, wobei beim Befüllen des Hohlraumes die Holzspäne (19) und das Bindemittel (20) insbesondere je entgegengesetzt elektrisch aufgeladen werden, damit eine schnelle und möglichst vollständige Durchmischung gewährleistet ist.

11. Verfahren nach Anspruch 9, **dadurch gekennzeichnet, dass** zur Herstellung der Lage aus Dämmstoff (4) mit mindestens einer Auftrageinrichtung (25) Holzspäne (19) schichtförmig auf ein Trägerband (26) aufgetragen, die Holzspäne (19) über eine Düsenanordnung mit einem Bindemittel (20) beaufschlagt werden und auf einer Aushärtungsstrecke ein Pressband (27) die mit dem Bindemittel versehenen Holzspäne (19) gegen das Trägerband (26) presst, wobei zum Abtrennen von Abschnitten der Lage aus Dämmstoff (4) vorzugsweise das Trägerband (26) und/oder das Pressband (27) Trennelemente aufweist und insbesondere die Holzspäne (19) und das Bindemittel (20) beim Auftragen bzw. Beaufschlagen vorzugsweise je entgegengesetzt elektrisch aufgeladen sind, damit eine schnelle und möglichst vollständige Durchmischung gewährleistet ist.

12. Verfahren nach einem der Ansprüche 9 bis 11, **dadurch gekennzeichnet, dass** ausgehend von 1m$^3$ Holz in der Form von rohen Brettern mit einem Gewicht von im Wesentlichen 450kg 30 bis 60 Gewichtsprozent, vorzugsweise im Wesentlichen 180kg dieses Holzmaterials in Leichtbauplatten (2) gelangt, deren Hohlraumanteil insbesondere in einem Bereich von 30% bis 50% liegt, und dass vom abgetragenen Restmaterial 100kg bis 270kg, vorzugsweise im Wesentlichen 200kg, für die Produktion von Dämmstoff (4) eingesetzt wird, wobei die Dichte des Dämmstoffs (4) im Bereich von 60 bis 90kg/m$^3$ liegt und insbesondere zusätzlich zum Holzmaterial in den Leichtbauplatten (2) Dämmstoff (4) mit einem Volumen im Bereich von 1.5m$^3$ bis 3.5m$^3$ bereitgestellt wird.

13. Verwendung von Leichtbauelementen (1) und/oder Leichtbauplatten (2) zum Erstellen eines Hauses, **dadurch gekennzeichnet, dass** Leichtbauelemente (1) gemäß einem der Ansprüche 6 bis 8, bzw. Leichtbauplatten (2) gemäß einem der Ansprüche 1 bis 5 verwendet werden, wobei diese formschlüssig aneinander anliegen und mit Verbindungs- und/oder Spannelementen (30, 17, 18, 30a, 35) zusammengehalten werden.

**Claims**

1. A lightweight construction panel (2) comprising boards (6) or comprising sections of boards (6), which boards (6) or sections, respectively, have a group of grooves (9) running parallel on at least one of the main surfaces (8) thereof, are arranged in at least one layer (5) and are connected to one another, wherein the grooves (9) form cavities in the lightweight construction panel (2), and the grooves (9) and the webs (14) formed between the grooves (9) extend parallel to the longitudinal direction of the boards (6) or sections, respectively, **characterised in that** the groove width of at least a portion of the grooves (9) of the boards (6) or sections, respectively, of the at least one lightweight construction panel (2) increases away from the main surface (8) towards the interior of the board (6) or section, respectively, and the webs (14) of wood formed between these grooves (9) accordingly become wider from the interior of the board (6) or section, respectively, against the main surface (8) and have a wider web surface (15) on the main surface (8).

2. The lightweight construction panel (2) according to claim 1, **characterised in that** it comprises at least two layers (5), and each layer (5) is formed of boards (6) comprising grooves (9), wherein the boards (6) of each layer (5), on the side flanks (7) thereof, and the directly adjoining layers (5), on the main surfaces (8) of their boards (6), are connected to one another via adhesive bonds, and grooves (9), which face one another, of various layers (5), which are connected to one another, run at an angle to one another.

3. The lightweight construction panel (2) according to claim 1 or 2, **characterised in that** in the case of at least a portion of the layers (8), the boards (6) each have a group of grooves (9) running parallel on both main surfaces (8), and, preferably at least on one main surface (8), a second group of parallel grooves (9) is formed at an acute angle to the first group of this main surface (8).

4. The lightweight construction panel (2) according to any one of claims 1 to 3, **characterised in that** of lightweight construction panels, in the case of which the main surfaces of the boards run parallel to the outer surface of the lightweight construction panel, short sections of identical length are turned by 90°, are arranged next to one another in one layer, and are each brought into mutual connection with the partial surfaces of the outer surfaces of the divided lightweight construction panels, so that they form a layer of sections, wherein the sectional areas of the joined sections form the outer surfaces of the layer of the short sections.

5. The lightweight construction panel (2) according to claim 4, **characterised in that** a cover layer is arranged on at least one of these outer surfaces.

6. A lightweight construction element (1) comprising a lightweight construction panel (2) according to any one of claims 1 to 5, **characterised in that** the lightweight construction element (1) also comprises at least one layer of insulating material (4) comprising wood chips (19).

7. The lightweight construction element (1) according to claim 6, **characterised in that** the wood chips (19) of the insulating material (4) are formed essentially in a strip-shaped and flat, wavy, roll-shaped, helical or spiral manner, and at least 80 percent by weight of the wood chips (19) of the insulating material (4) are formed by wood chips (19) with a length in the range of between 2 mm and 40 mm.

8. The lightweight construction element (1) according to claim 6 or 7, **characterised in that** the wood chips (19) of the insulating material (4), together with a binding agent (20), form an essentially cohesive structure, the binding agent (20) comprises at least a portion of an organic binder and/or of an inorganic binder, wherein the binder comprises in particular tannin, the organic binder is preferably a polymer binder, in particular polyvinyl acetate (PVAc), and the inorganic binder is preferably a binder on the basis of alkali polysilicates, in particular a mixture of sodium silicate and/or potassium silicate with lithium silicate.

9. A method for producing a lightweight construction element (1) comprising at least one lightweight construction panel (2) and a layer of insulating material (4) associated with the lightweight construction panel (2), wherein the at least one lightweight construction panel (2) comprises boards (6), which have a group of grooves (9) running parallel on at least one of the main surfaces (8) thereof, are arranged in at least one layer (5) and are connected to one another via adhesive bonds, **characterised in that**, for providing the boards (6) with grooves (9), which boards are joined to form at least one layer (5) of the lightweight construction panel (2), wood chips (19) are removed from starting boards and are at least partially used for producing the layer of insulating material (4), wherein in the case of at least a portion of the grooves (9) of the boards (6) of the at least one lightweight construction panel (2), the groove width is formed to be larger, away from the main surface (8) towards the interior of the board (6), and the webs (14) of wood formed between these grooves (9) accordingly become wider, from the interior of the board (6) towards the main surface (8), and have a wide web surface (15) on the main surface (8).

10. The method according to claim 9, **characterised in that** at least one cavity is formed on the lightweight construction element (1) between the at least one lightweight construction panel (2) and at least one further panel, into which cavity the wood chips (19) are filled, preferably together with a binding agent (20), in order to produce the layer of insulating material (4), wherein the wood chips (19) and the binding agent (20) are in particular each oppositely electrically charged in response to the filling of the cavity, so that a quick and most complete mixing is ensured.

11. The method according to claim 9, **characterised in that**, in order to produce the layer of insulating material (4) by means of at least one application device (25), wood chips (19) are applied to a carrier belt (26) in layers, the wood chips (19) are charged with a binding agent (20) via a nozzle arrangement, and a pressing belt (27) presses the wood chips (19) charged with the binding agent against the carrier belt (26) on a curing section, wherein, in order to separate sections of the layer of insulating material (4), the carrier belt (26) and/or the pressing belt (27) preferably has separating elements, and in particular the wood chips (19) and the binding agent (20) are each preferably oppositely electrically charged under the application or charging, respectively, so that a quick and most complete mixing is ensured.

**12.** The method according to any one of claims 9 to 11, **characterised in that**, based on 1 m$^3$ of wood in the form of bare boards with a weight of essentially 450 kg, between 30 and 60 percent by weight, preferably essentially 180 kg of this wood material, reaches into lightweight construction panels (2), the cavity portion of which lies in particular in a range of between 30% and 50%, and that between 100 kg and 270 kg, preferably essentially 200 kg, of the removed residual material is used for the production of insulating material (4), wherein the density of the insulating material (4) lies in the range of between 60 and 90 kg/m$^3$, and insulating material (4) with a volume in the range of between 1.5 m$^3$ and 3.5 m$^3$ is provided in particular in addition to the wood material in the lightweight construction panels (2).

**13.** A use of lightweight construction elements (1) and/or lightweight construction panels (2) for constructing a house, **characterised in that** lightweight construction elements (1) according to any one of claims 6 to 8 or lightweight constructional panels (2) according to any one of claims 1 to 5 are used, respectively, wherein they abut against one another in a positive manner and are held together by means of connecting and/or clamping elements (30, 17, 18, 30a, 35).

**Revendications**

**1.** Panneau de construction léger (2) constitué de planches (6) ou de sections de planches (6), les planches (6) et/ou sections présentant, au moins sur l'une de leurs surfaces principales (8), un groupe de rainures (9) parallèles, et étant disposées au moins dans une couche (5) et reliées entre elles, les rainures (9) formant des cavités dans le panneau de construction léger (2) et les rainures (9) et les entretoises (14) formées entre les rainures (9), s'étendant parallèlement au sens longitudinal des planches (6) et/ou sections, **caractérisé en ce que,** au moins une partie des rainures (9) des planches (6) et/ou sections d'au moins un panneau de construction léger (2), a une largeur plus grande depuis la surface principale (8) vers l'intérieur de la planche (6) et/ou de la section et, par conséquent, les entretoises (14) en bois formées entre les rainures (9) deviennent plus larges depuis l'intérieur de la planche (6) et/ou de la section vers la surface principale (8) et présentent une surface d'entretoise (15) large sur la surface principale (8).

**2.** Panneau de construction léger (2) conformément à la revendication n°1, **caractérisé en ce que** celui-ci comprend au moins deux couches (5) et que chaque couche (5) est constituée de planches (6) avec des rainures (9), les planches (6) de chaque couche (5), au niveau de leurs flancs latéraux (7), ainsi que les couches (5) contiguës étant reliées par des liaisons adhésives sur les surfaces principales (8) de leurs planches (6) et les rainures (9) disposées face à face des différentes couches (5) reliées entre elles s'étendant sous un angle les unes par rapport aux autres.

**3.** Panneau de construction léger (2) conformément à la revendication n°1 ou n°2, **caractérisé en ce que**, au moins pour une partie des couches (5), les planches (6) présentent, sur les deux surfaces principales (8), un groupe de rainures (9) parallèles et, de préférence au moins sur une surface principale (8), un deuxième groupe de rainures (9) parallèles est formé sous un angle aigu par rapport au premier groupe de cette surface principale (8).

**4.** Panneau de construction léger (2) conformément à l'une des revendications n°1 à n°3, **caractérisé en ce que**, depuis les panneaux de construction légers, pour lesquels les surfaces principales des planches s'étendent parallèlement à la surface extérieure du panneau de construction léger, des sections courtes de même longueur sont tournées de 90°, disposées les unes à côté des autres dans une couche et mises en liaison mutuelle avec les surfaces partielles des surfaces extérieures des panneaux de construction légers divisés de façon à former une couche composée de sections, les surfaces de coupe des sections assemblées constituant les surfaces extérieures de la couche composée des sections courtes.

**5.** Panneau de construction léger (2) conformément à la revendication n°4, **caractérisé en ce qu'**une couche de revêtement est disposée au moins sur l'une de ces surfaces extérieures.

**6.** Élément de construction léger (1) comprenant un panneau de construction léger (2) conformément à l'une des revendications n°1 à n°5, **caractérisé en ce que** l'élément de construction léger (1) comprend également au moins une couche en matériau isolant (4) avec des copeaux de bois (19) .

**7.** Élément de construction léger (1) conformément à la revendication n°6, **caractérisé en ce que** les copeaux de bois (19) du matériau isolant (4) sont essentiellement constitués en forme de bande, en forme plate, ondulée, cylindrique, en forme de ressort ou de spirale et qu'au moins 80% du poids des copeaux de bois (19) du matériau isolant (4) se composent de copeaux de bois (19) d'une longueur comprise entre 2 mm et 40 mm.

**8.** Élément de construction léger (1) conformément à la revendication n°6 ou n°7, **caractérisé en ce que** les copeaux de bois (19) du matériau isolant (4) forment, avec un agent liant (20), une structure essentiellement cohérente, que l'agent liant (20) comprend au moins une teneur en liant organique et/ou liant inorganique, le liant comprenant en particulier du tanin, le liant organique étant de préférence un liant polymère, en particulier du polyacétate de vinyle (PVAc), et le liant inorganique étant de préférence un liant à base de polysilicates alcalins, en particulier un mélange de silicate de sodium et/ou de silicate de potassium avec du silicate de lithium.

9. Procédé pour la fabrication d'un élément de construction léger (1) avec au moins un panneau de construction léger (2) et une couche en matériau isolant (4) affectée au panneau de construction léger (2), au moins le panneau de construction léger (2) comprenant des planches (6) qui, sur au moins une de leurs surfaces principales (8), présentent un groupe de rainures (9) parallèles, sont disposées au moins dans une couche (5) et reliées entre elles par des liaisons adhésives, **caractérisé en ce que,** pour la mise à disposition des planches (6) avec des rainures (9) qui sont assemblées au moins dans une couche (5) du panneau de construction léger (2), des copeaux de bois (19) sont enlevés des planches initiales et utilisés au moins en partie pour la fabrication de la couche en matériau isolant (4), au moins une partie des rainures (9) des planches (6) d'au moins un panneau de construction léger (2) a une largeur plus grande depuis la surface principale (8) vers l'intérieur de la planche (6) et, par conséquent, les entretoises (14) en bois formées entre ces rainures (9) devenant plus larges depuis l'intérieur de la planche (6) vers la surface principale (8) et présentant une surface d'entretoise (15) large sur la surface principale (8).

10. Procédé conformément à la revendication n°9, **caractérisé en ce que**, sur l'élément de construction léger (1) entre au moins le panneau de construction léger (2) et au moins un autre panneau, au moins un interstice est arrangé, dans lequel, pour la fabrication de la couche en matériau isolant (4), les copeaux de bois (19) sont versés de préférence avec un agent liant (20), les copeaux de bois (19) et l'agent liant (20) étant en particulier mutuellement chargés électriquement lors du remplissage de l'interstice afin de garantir un mélange rapide et le plus complet possible.

11. Procédé conformément à la revendication n°9, **caractérisé en ce que**, pour la fabrication de la couche en matériau isolant (4) avec au moins un dispositif d'application (25), des copeaux de bois (19) sont appliqués en couche sur une bande de support (26), les copeaux de bois (19) sont dotés d'un agent liant (20) par une disposition de buse et une bande de compression (27) comprimant les copeaux de bois (19) dotés de l'agent liant contre la bande de support (26) sur une voie de durcissement, de préférence la bande de support (26) et/ou la bande de compression (27) présentant des éléments de séparation pour la séparation de sections de la couche en matériau isolant (4) et en particulier les copeaux de bois (19) et l'agent liant (20) étant de préférence mutuellement chargés électriquement pendant l'application et/ou l'alimentation afin de garantir un mélange rapide et le plus complet possible.

12. Procédé conformément à l'une des revendications n°9 à n°11, **caractérisé en ce que**, sur la base de 1 m$^3$ de bois sous forme de planches brutes avec un poids essentiellement de 450 kg, 30 à 60% du poids, de préférence essentiellement 180 kg de ce matériau de bois, parviennent dans les panneaux de construction léger (2), dont le taux d'interstices se situe en particulier entre 30% et 50% et que, du matériau restant enlevé, 100 kg à 270 kg, de préférence essentiellement 200 kg, sont utilisés pour la production de matériau isolant (4), la densité du matériau isolant (4) se situant entre 60 et 90 kg/m$^3$ et en particulier en plus du matériau de bois dans les panneaux de construction léger (2,) du matériau isolant (4) avec un volume compris entre 1,5 m$^3$ et 3,5 m$^3$ étant mis à disposition.

13. Utilisation d'éléments de construction léger (1) et/ou de panneaux de construction léger (2) pour la construction d'une maison, **caractérisée en ce que** des éléments de construction léger (1) conformément à l'une des revendications n°6 à n°8 et/ou des panneaux de construction léger (2) conformément à l'une des revendications n°1 à n°5 sont utilisés, ces derniers étant appliqués les uns contre les autres par complémentarité de forme et étant maintenus assemblés au moyen d'éléments de liaison et/ou de serrage (30, 17, 18, 30a, 35).

EP 3 129 564 B1

Fig. 2a

Fig. 2

Fig. 1

20

Fig. 3

Fig. 4

Fig. 5

Fig. 6

Fig. 7

Fig. 8

Fig. 9

EP 3 129 564 B1

Fig. 10

Fig. 11

23

Fig. 12

Fig. 13

EP 3 129 564 B1

Fig. 14

Fig. 15

Fig. 16

Fig. 17

EP 3 129 564 B1

Fig. 18

26

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1734200 A1
- EP 2060694 A1
- AT 507231 B1
- AT 505855 B1
- AT 505486 B1
- AT 503236 B1
- AT 508154 B1
- WO 2013160313 A
- EP 1288386 A1
- WO 9532082 A1

- AT 509157 A1
- DE 19523131 A1
- DE 19853497 A1
- DE 19757344 A1
- EP 1674224 B1
- EP 1027505 B1
- WO 2011015714 A
- DE 102004025323 A1
- EP 1913211 B1
- DE 2652421 A1